# EUROPEAN PATENT SPECIFICATION

(11) **EP 1 218 201 B1**
(45) Date of publication and mention of the grant of the patent: **12.01.2005**
(21) Application number: 00959218.9
(22) Date of filing: 11.08.2000
(51) Int. Cl.: B41M 5/035, B41M 5/00, D06Q 1/12, D06P 5/00, G09F 3/10, G09F 3/02, B42D 15/02, C09J 7/04, C09J 7/02, G03G 7/00, B44C 1/10, B32B 27/08

(54) **PRINTABLE HEAT-SETTING LABEL SHEET**
BEDRUCKBARES WÄRMEHÄRTBARES ETIKETTENBLATT
FEUILLE ETIQUETTE THERMOFIXANTE IMPRIMABLE

(30) Priority: 13.08.1999 US 148562 P
(43) Date of publication of application: 03.07.2002
(73) Proprietor: Foto-Wear, Inc., Milford, PA 18337 (US)
(72) Inventor: WILLIAMS, Scott, A., Hawley, PA 18428 (US); REID, Heather, M., Hamburg, NJ 07419 (US)
(74) Representative: Isenbruck, Günter, Dr.
(86) International application number: PCT/US2000/022079
(87) International publication number: WO 2001/012447

(56) References cited:
- WO-A-96/08367
- US-A- 4 763 931
- US-A- 5 514 435
- US-A- 5 798 179

## Description

### FIELD OF THE INVENTION

The present invention relates to a heat-setting label sheet and a method of transferring an image to a receptor element. More specifically, the present invention relates to a heat-setting label sheet which can be imaged, and having images which are capable of being directly transferred to, for instance, a receiver such as a textile, such as a shirt or the like.

### BACKGROUND OF THE INVENTION

Textiles such as shirts (e.g., tee shirts) having a variety of designs thereon have become very popular in recent years. Many shirts are sold with pre-printed designs to suit the tastes of consumers. In addition, many customized tee shirt stores are now in the business of permitting customers to select designs or decals of their choice.

Transfer papers per se are known in the art in order to permit customers to create their own designs on transfer sheets for application to tee shirts by use of a conventional hand iron, such as described in U.S. Patent No. 4,244,358 issued September 23, 1980. Furthermore, U.S. Patent No. 4,773,953 issued September 27, 1988, is directed to a method for utilizing a personal computer, a video camera or the like to create graphics, images, or creative designs on a fabric.

US Patent 5,620,548 is directed to a silver halide photographic transfer element and to a method for transferring an image from the transfer element to a receptor surface. US patent 6,033,824 discloses that the silver halide light sensitive grains be dispersed within a carrier that functions as a transfer layer, and does not have a separate transfer layer. WO 98/20393 discloses that the silver halide transfer element has a separate transfer layer. US patent 6,294,307 relates to a transfer element using CYCOLOR technology, and has a separate transfer layer. US patent 6,245,710 relates to a transfer element using thermoautochrome technology, and has a separate transfer layer. US patent 6,265,128 relates to a transfer element using CYCOLOR and thermo-autochrome technology, but having no separate transfer layer. US patent 6,410,200 by Williams et al., filed April 1, 1999 is directed to a transfer sheet which, in one embodiment, is imagable by a laser copier or laser printer.

U.S. Patent 5,798,179 is directed to a printable heat transfer material using a thermoplastic polymer such as a hard acrylic polymer or poly(vinyl acetate) as a barrier layer, and has a separate film-forming binder layer.

U.S. Patent 5,271,990 relates to an image-receptive heat transfer paper which includes an image-receptive melt-transfer film layer comprising a thermoplastic polymer overlaying the top surface of a base sheet.

U.S. Patent 5,502,902 relates to a printable material comprising a thermoplastic polymer and a film-forming binder.

U.S. Patent 5,614,345 relates to a paper for thermal image transfer to flat porous surfaces, which contains an ethylene copolymer or a ethylene copolymer mixture and a dye-receiving layer.

"WO 96/08367 discloses a pressure-sensitive adhesive construction such as a pressure-sensitive adhesive tape and label construction which show good adhesion to a wide variety of substrates of varying roughness and improved convertibility comprising: a facestock, a first adhesive layer on a first side of the facestock having a first glass transition temperature and a second adhesive layer under construction on the first side of the facestock having a second glass transition temperature which is different from the first glass transition temperature. The document does not relate to a heat-setting label sheet or a method of transferring an image to a receptor element such as a textile by application of heat.

US 5,514,435 relates to a pressure-sensitive adhesive sheet for non-impact printing comprising a base sheet, an undercoat layer formed on said base sheet, a release agent layer formed on said undercoat layer, a pressure-sensitive adhesive layer formed on said release and a facestock disposed on said pressure-sensitive adhesive layer. The adhesive sheet allegedly shows reduced tendency toward curl, has good feeding properties, good duplication and ink jet recording properties and improved writing and labelling properties. The document does not relate to a heat-setting label sheet or a method of transferring an image to a receiver such as a textile by application of heat.

US 4,763,931 relates to an adhesive material which prevents reuse, for example, as a price tag or a label or the like adhered on the opening of a package. The label for preventing reuse comprises a first layer, a first adhesion layer formed on said first layer, a second layer laminated on the adhesion layer tentatively bonded, a second adhesive layer formed on either main surface of said second layer, and an adhesive power reducing layer formed in a portion of either surface of said second adhesive layer which lower the adhesive power of second adhesive layer. The document is unrelated to a heat setting label sheet or a method for transferring an image to a receiver such as a textile by the application of heat."

### SUMMARY OF THE INVENTION

The present invention relates to a polymeric transfer sheet that can be marked and transferred by the consumer. The transfer sheet of the present invention comprise a base or support. The base may be, for example, a silicone coated release base. A lightly tacky pressure sensitive adhesive layer (PSA) is optionally coated onto the base. The PSA may be any polyester or acrylic polymer or copolymer blend or rubbery contact adhesive and preferably has a glass transition temperature (Tg) of less than zero degrees Centigrade. Coated onto the PSA is an Adhesion Layer that comprises a thermoplastic polymer which melts in the range of 50-250°C, a wax which melts in the range of 50-250°, or combinations thereof. The adhesion layer is capable of being removed from the support without heat. Optionally one or more opaque layers and one or more image receiving layers may be coated in turn over the Adhesion Layer. Said optional opaque layer(s) adds a rigid or stiff quality to the transfer sheet for ease of handling, as well as having opacity, especially white, to enhance visibility of the image when placed thereon. Said image receiving layer either does not melt when heat is applied or melts at a temperature above the melting temperature of the Adhesion Layer. Preferably, the image receiving layer does not melt below 260°C.
In another embodiment of the present invention, the above-described label sheet may comprise a barrier layer coated on said first surface of the support, said barrier layer comprising (1) a vinyl acetate with a Tg in the range of -10°C to 100°C; (2) a thermoplastic polymer having essentially no tack at transfer temperatures, a solubility parameter of at least 19 (Mpa)^{1/2}, and a glass transition temperature of at least 0°C, or (3) thermosetting polymers, ultraviolet curing polymers, or combinations thereof. If a barrier layer is used, the PSA may not be needed. That is, the barrier layer may perform the function of the PSA.

The present invention further relates to a process of transferring an image, which comprises imaging the above-described heat-setting label sheets (e.g., containing either a PSA, barrier layer, or both a PSA and barrier layer), peeling the adhesive layer and subsequent layers (such as, for example, heat transfer material or label material) from the base sheet (base material or support material), positioning the peeled portion of the label sheet onto the receptor element, and applying heat energy to the remaining layers of the heat transfer material with a household iron or a heat press. Heat is applied to the transfer element after peeling in order to melt the Adhesion Layer into the receptor element. However, the image receiving layer is not melted. As a result, a substantial single layer is formed which encapsulates the image (i.e., colorant) in a single layer. Therefore, peeling occurs in the absence of heat, water, chemicals or any other peeling aid.

The heat-setting label sheet of the present invention can be imaged upon using electronic means or craft-type marking. The electronic means may be, for example, electrostatic printers including but not limited to laser printers or laser copiers (color or monochromatic). In another embodiment, the invention may also be practiced with ink jet or thermal transfer printers. The present invention may also be practiced with offset printing (conventional printing) or screen printing. Further, the present invention may be practiced using craft-type markings such as, for example, markers, crayons, paints or pens.

When a laser printer or laser copier is used to image heat-setting label sheet of the present invention, the transfer label sheet of the present invention may optionally comprise an antistatic layer, which is coated on the backside of the base support or support (i.e., the side that was not previously coated with the Adhesion Layer, etc.).

### BRIEF DESCRIPTION OF THE DRAWINGS

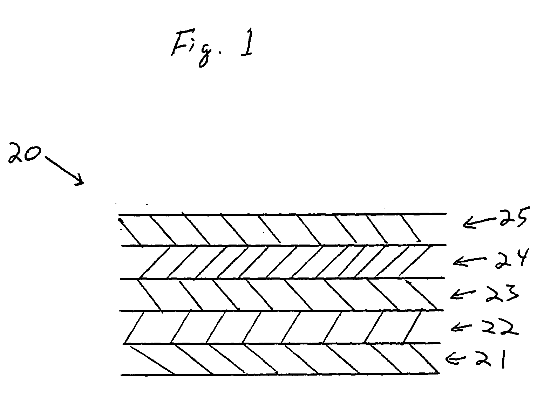

Fig. 1 represents an embodiment of the heat-setting label sheet of the present invention.

### DETAILED DESCRIPTION OF THE INVENTION

The present invention is a heat-setting label sheet, which comprises a support, a pressure-sensitive adhesive layer comprising a polyester or acrylic polymer or copolymer blends preferably with a glass transition temperature (Tg) of less than zero degrees Centigrade, an Adhesion Layer comprising a thermoplastic polymer which melts in the range of 50 - 250°C, a wax which melts in the range of 50-250°C, or combinations thereof, optionally one or more opaque layers, and one or more image receiving layers.

The invention is based on the idea of a sheet of transferable polymers, imaged and transferred by the consumer. In one embodiment of the invention, the heat-setting label sheet closely resembles in appearance a sheet of AVERY brand labels. As discussed in greater detail below, the heat-setting label sheet of the present invention can be imaged in various ways including using an ink jet or laser printer, or various craft markers. One advantage of the present invention is that the heat-setting label sheets of the present invention are not imaged in reverse (i.e., printed as a mirror image of the transferred image), which is typical in the transferable media arts. That is, since the heat sealing element of the heatsetting label sheets of the present invention is peeled off the base sheet and placed on the receptor with the back of the image resting on the receptor (i.e., face up), the image does not need to be printed in reverse and placed face down on the receptor element. Since the heat-setting label sheets of the present invention do not need to be printed in reverse it is easier to use craft-type markers to image the heat-setting label sheet of the present invention than typical transfer sheets.

The heat-setting label sheets of the present invention retain ink, hold shape, and maintain strength. Specifically, the heat-setting label sheets of the present invention retain ink, hold shape, and maintain strength through multiple washings when the receptor element is a tee shirt or the like.

End uses for the heat-setting label sheet of the present invention include labels and designs for children's clothing, name labels and designs for book bags, tote bags, beach bags, and ID tracking numbers for dry cleaners use.

Embodiments of the present invention also addresses a problem with many known transfer sheets in that when conventional transfer materials travel through laser printers or copiers, the high temperature in the printers and copiers partially melts some polymer materials, such as a wax, present in the transfer material. As a result, the laser printer or copier must be frequently cleaned. The present invention solves this problem in the art. However, as described below, the present invention is not limited to use in laser printers and copiers.

The present invention also provides for a kit containing the heat setting label sheet of the present invention and instructions for transferring an image thereon. The kit may also optionally contain markers, paint, crayons, tee-shirts, prep-shirts and other design aids.

The present invention further provides for a greeting card containing the heat setting label sheet of the present invention. Greeting cards may be those described in, for example, copending WO 01/62514 filed February 25, 2000.

### The Base Material

### 1. Support

Any nonwoven cellulosic support with or without an optional barrier layer may be used with the present invention. The support may also comprise a polyester film support. Most preferably, a silicone coated release base is used with the present invention.

The support preferably provides a surface that will promote or at least not adversely affect the peeling away of the layers coated thereon (e.g., heat sealing material) after imaging. An appropriate support may include but is not limited to a cellulosic nonwoven web or film, such as a smooth surface, heavyweight (approximately 24 lb. [13.1 kg]) laser printer or color copier paper stock or laser printer transparency (polyester) film. The particular support used is not known to be critical, so long as the support has sufficient strength for handling, copying, coating, peeling and other operations associated with the present invention. Accordingly, in accordance with some embodiments of the present invention, the support may be the base material for any printable material, such as described in U.S. Patent No. 5,271,990 to Kronzer.

In accordance with other embodiments of the invention, the support must be usable in a laser copier or laser printer. A preferred support for this embodiment is equal to or less than approximately 4.0 mils (0,102 mm) thick.

Since this particular label sheet is useable in a laser copier or laser printer, antistatic agents may be present. The support has a front (first) surface and a back (second) surface. The antistatic agents may be present in the form of a coating on the back surface of the support as an additional layer. The back surface of the support is the surface that is not previously coated with the release layer, optional barrier layer, etc.

When the antistatic agent is applied as a coating onto the back surface of the support, the coating will help eliminate copier or printer jamming by preventing the electrostatic adhesion of the paper base to the copier drum of laser and electrostatic copiers and printers. Antistatic agents, or "antistats" are generally, but not necessarily, conductive polymers that promote the flow of charge away from the paper. Antistats can also be "humectants" that modulate the level of moisture in a paper coating that affects the build up of charge. Antistats are commonly charged tallow ammonium compounds and complexes, but also can be complexed organometallics. Antistats may also be charged polymers that have a similar charge polarity as the copier/printer drum; whereby the like charge repulsion helps prevent jamming.

Antistatic agents include, by way of illustration, derivatives of propylene glycol, ethylene oxide-propylene oxide block copolymers, organometallic complexes such as titanium dimethylacrylate oxyacetate, polyoxyethylene oxide-polyoxypropylene oxide copolymers and derivatives of cholic acid.

More specifically, commonly used antistats include those listed in the Handbook of Paint and Coating Raw Materials, such as t-Butylaminoethyl methacrylate; Capryl hydroxyethyl imidazoline; Cetethyl morpholinium ethosulfate; Cocoyl hydroxyethyl imidazoline Di(butyl, methyl pyrophosphato) ethylenetitanate di(dioctyl, hydrogen phosphite); Dicyclo (dioctyl)pyrophosphato; titanate; Di (dioctylphosphato) ethylene titanate; Dimethyl diallyl ammonium chloride; Distearyldimonium chloride; N,N'-Ethylene bis-ricinoleamide; Glyceryl mono/dioleate; Glyceryl oleate; Glyceryl stearate; Heptadecenyl hydroxyethyl imidazoline; Hexyl phosphate; N(β-Hydroxyethyl)ricinoleamide; N-(2-Hydroxypropyl) benzenesulfonamide; Isopropyl4-aminobenzenesulfonyl di(dodecylbenzenesulfonyl)titanate; Isopropyl dimethacryl isostearoyl titanate; isopropyltri(dioctylphosphato) titanate; Isopropyl tri(dioctylpyrophosphato)titanate; Isopropyl tri(N ethylaminoethylamino) titanate; (3-Lauramidopropyl) trimethyl ammonium methyl sulfate; Nonyl nonoxynol-15; Oleyl hydroxyethylimidazoline; Palmitic/stearic acid mono/diglycerides; PCA; PEG-36 castor oil; PEG-10 cocamine; PEG-2 laurate; PEG-2; tallowamine; PEG-5 tallowamine; PEG-15 tallowamine; PEG-20 tallowamine; Poloxamer® 101; Poloxamer® 108; Poloxamer® 123; Poloxamer® 124; Poloxamer® 181; Poloxamer® 182; Polaxamer® 184; Poloxamer® 185; Poloxamer® 188; Poloxamer® 217; Poloxamer® 231; Poloxamer® 234; Poloxamer® 235; Poloxamer® 237; Poloxamer® 282; Poloxamer® 288; Poloxamer® 331; Polaxamer® 333; Poloxamer® 334; Poloxamer® 335; Poloxamer® 338; Poloxamer® 401; Poloxamer® 402; Poloxamer® 403; Poloxamer® 407; Poloxamine® 304; Poloxamine® 701; Poloxamine® 704; Polaxamine® 901; Poloxamine® 904; Poloxamine® 908; Poloxamine® 1107; Poloxamine® 1307; Polyamide/epichlorohydrin polymer; Polyglyceryl-10 tetraoleate; Propylene glycol laurate; Propylene glycol myristate; PVM/MA copolymer; polyether; Quaternium-18; Slearamidopropyl dimethyl-ß-hydroxyethyl ammonium dihydrogen phosphate; Stearamidopropyl dimethyl-2-hydroxyethyl ammonium nitrate; Sulfated peanut oil; Tetra (2, diallyoxymethyl-1 butoxy titanium di (di-tridecyl) phosphite; Tetrahydroxypropyl ethylenediamine; Tetraisopropyl di (dioctylphosphito) titanate; Tetraoctyloxytitanium di (ditridecylphosphite); Titanium di (butyl, octyl pyrophosphate) di (dioctyl, hydrogen phosphite) oxyacetate; Titanium di (cumylphenylate) oxyacetate; Titanium di (dioctylpyrophosphate) oxyacetate; Titanium dimethacrylate oxyacetate.

Preferably, Marklear® AFL-23 or Markstat® AL-14, polyethers available from Whitco Industries, are used as an antistatic agents.

The antistatic coating may be applied on the back surface of the support by, for example, spreading a solution comprising an antistatic agent (i.e., with a metering rod) onto the back surface of the support and then drying the support.

### 2. The Optional Barrier Layer

The barrier layer is an optional first coating on the support. Furthermore, the heat-setting label sheet of the present invention may comprise more than one barrier layer coated onto the support. The barrier layer also assists in releasing the heat sealing material from the support. When the support performs the same function as the barrier layer, the barrier layer is not required. For example, when the support is a polyester film base, such as polyacetate, there will be minimal adherence to the support by the pressure sensitive adhesive layer and/or the heat sealing material. Accordingly, in those instances, a barrier layer may not be required.

Thus, the barrier layer is a coating that separates the support from the remaining layers of the heat-setting label sheet. The barrier layer, when necessary, is between the support and the remaining layers. After peeling, the barrier layer preferably remains with the support.

The barrier layer(s) of the present invention may be one of the barrier layers discussed in US patent 6,410,200. Preferably, the barrier layer is any vinyl acetate with a Tg in the range of from -10°C to 100°C. Alternatively, the Tg may be in the range of from 0°C to 100°C. EVERFLEX® G. with a Tg of about -7°, may be used as a preferred embodiment.

Other examples of a suitable barrier layer(s) of the present invention may be the release layer of U.S. Patent 5,798,179 to Kronzer. The barrier layer may be composed of a thermoplastic polymer having essentially no tack at transfer temperatures (e.g., 177°C.), a solubility parameter of at least about 19 (Mpa)^{1/2}, and a glass transition temperature of at least about 0°C. As used herein, the phrase "having essentially no tack at transfer temperatures" means that the barrier layer does not stick to the Release Layer to an extent sufficient to adversely affect the quality of the transferred image. By way of illustration, the thermoplastic polymer may be a hard acrylic polymer or poly(vinyl acetate). For example, the thermoplastic polymer may have a glass transition temperature (T_{g}) of at least 25°C. As another example, the T_{g} may be in a range of from 25°C to 100°C. The barrier layer also may include an effective amount of a release-enhancing additive, such as a divalent metal ion salt of a fatty acid, a polyethylene glycol, or a mixture thereof. For example, the release-enhancing additive may be calcium stearate, a polyethylene glycol having a molecular weight of from 2,000 to 100,000, or a mixture thereof.

In one embodiment of the invention, Barrier Layer Formulation 1, the barrier layer comprises a vinyl acetate polymer.

Barrier Layer Formulation 1 may be prepared as described in US patent 6,410,200.

In another embodiment of the present invention, the barrier layer contains a polyester resin such as polymethyl methacrylate (PMMA) in a molecular weight range of from 15,000 to 120,000 Daltons.

Barrier Layer Formulation 2 may be prepared as described in Provisional application US patent 6,410,200.

Furthermore, the barrier layer(s) of the present invention may comprise the thermosetting polymers, ultraviolet curing polymers, or combinations thereof as described in US patent 6,358,660.

### 3. Pressure Sensitive Adhesive Layer

The pressure sensitive adhesive layer (PSA) allows the layers of the heat-setting label sheet to be easily separated by peeling from the support. If an above-described barrier layer accomplishes this task, the pressure sensitive adhesive layer may be optional.

Generally, the pressure sensitive adhesive layer remains with the support, along with the barrier layer. However, any portion of the pressure sensitive adhesive layer that is peeled away with the remaining layers of the label helps to provide stickiness used to adhere the label to the receptor. That is, the pressure sensitive adhesive layer allows the label to be laid onto the receptor and repositioned multiple times with a slight tack. However, the PSA layer does not provide for permanent adhesion to the receptor.

Any polyester or acrylic polymer or copolymer blends may be used when the glass transition temperature (Tg) of the polyester, acrylic polymer or copolymer blend is less than zero degrees Centigrade. Preferably, the Tg will fall between -15°C and -70°C and display a slight tack when touched.

A preferred example of the pressure sensitive adhesive layer, Pressure Sensitive Adhesive Layer Formulation 1, is comprised of an acrylic polymer adhesive.

Preferably, the PSA has a thickness of about 0.4 mils (10,2 µm) (wet).

When the optional PSA layer is not used, the surface energy difference between the selected barrier layer and the Adhesion Layer, described below, must be between 0 to 50 dynes/cm, preferably 0 to 30 dynes/cm, most preferably 0 to 15 dynes/cm (1 dyn = 1 g cms⁻² = 10⁻⁵ N) .

### The Heat Sealing Material

### 4. The Adhesion Layer

The first layer that comprises the heat sealing material (i.e., label portion) that is peeled away from the support is the Adhesion Layer. The Adhesion Layer melts and flows upon application of heat and pressure, such as the heat and pressure applied from a household iron or heat press, binding the image to the receptor element. The adhesive layer gives the label the majority of its strength characteristics. The Adhesion Layer may optionally comprise pigments to help give an opaque background to aid in ink visibility on various colored receptors.

The Adhesion Layer comprises polymers and/or waxes which melts within a temperature range from 50-250°C, preferably 65-220°C, more preferably 70-180°C. The Adhesion Layer forms a film on the top surface of the pressure sensitive adhesive layer. The Adhesion Layer may comprise wax, thermoplastic polymers, or any combination thereof. The preferred binder chemical of the Adhesion Layer is an ethylene acrylic acid copolymer, yet other suitable binders include, but are not limited to, acrylic/styrene; Ceteareth® -18; Ceteareth® -80; Cetyl palmitate; Coumarone-indene resin, Ethylene/vinyl chloride copolymer; Ethyl hydroxyethyl cellulose; Ethyl polysilicate, Meroxapol® 105; Meroxapol® 171; Maroxapol® 172; Meroxapol® 174; Meroxapol® 252; Meroxapol® 254; Meroxapo® l 258; Meroxapol® 311; Methyl hydroxyethylcellulose; Phenylmethyl polysiloxane; Polyacrylamide; Polybutene; Polyvinyl alcohol, partially hydrolyzed; Polyvinyl methyl ether; Potassium silicate; PVM/MA copolymer, butyl ester; PVM/MA copolymer, ethyl ester, Sodium bentonite; Styrene/acrylates copolymer, Styrene-butadiene rubber; Styrene/MA copolymer; Styrene/PVP copolymer, Vinyl acetate/ethylene copolymer; Vinyl acetate/ethylene/vinyl chloride terpolymer; Vinyl actetate/vinyl laurate/vinyl chloride terpolymer; Vinyl acrylic copolymer; Vinyl chloride/vinyl acetate copolymer; Vinyl chloride/vinyl acetate/ ethylene terpolymer; vinylidene chloride copolymer.

Other suitable binders include those listed in U.S. Patent No. 5,798,179, in addition to polyolefins, polyesters, ethylene-vinyl acetate, copolymers, and ethylene-methacrylate acid copolymers. Waxes, categorized as natural waxes, include vegetable waxes such as carnuba wax, candelilla wax, rice wax and haze wax; mineral waxes such as ceresine wax, montan wax and derivatives of these; and petroleum waxes such as paraffin wax, and microcrystalline wax. Further, synthetic waxes can be used, which include polyethylene wax, oxidized polyethylene wax, and Fisher-Tropsch wax.

Suitable coating weight is about 3.0 mils (76,2 µm) (wet).

The heat sealing material used in the invention may comprise several layers if desired. Chemically, the Adhesion Layer of the invention corresponds to virtually all known release layers in the art of transferring images to t-shirts. Preferred are the release layers disclosed by Kimberly Clark Corporation, of Georgia, and Foto-Wear, Inc. of Milford, Pennsylvania.

For instance, the release layer of U.S. patent 6,410,200 may be used as the Adhesion Layer of the present invention. In such an embodiment, the Adhesion Layer may be prepared from, for example, a coating composition comprising an acrylic dispersion, an elastomeric emulsion, a plasticizer, and a water repellent. The water repellent may comprise, for example, polyurethane for the purpose of providing water resistance for toner retention and/or a retention aid.

The Adhesion Layer used in the present invention protects any image, provides mechanical and thermal stability, as well as washability, preferably without losing the flexibility of a textile, for example. That is, the Adhesion Layer should also provide a colorfast image (e.g. washproof or wash resistant). Thus, upon washing the receptor element (e.g. tee shirt), the image should remain intact.

Further, the Adhesion Layer satisfies the requirement for compatible components, in that the component dispersions remain in their finely dispersed state after admixture, without coagulating or forming clumps or aggregated particles which would adversely affect image quality. Additionally, the Adhesion Layer is preferably non-yellowing.

The Adhesion Layer has a low content of organic solvents, and any small amounts present during the coating process are sufficiently low as to meet environmental and health requirements. More specifically, the Adhesion Layer preferably has a content of organic solvents of less than 2% weight by weight of components. More preferably, the Adhesion Layer has a content of organic solvents of less than 1% weight by weight of components.

Various additives may be incorporated into the Adhesion Layer and/or the image receiving layer(s) discussed. Retention aids, wetting agents, plasticizers and water repellents are examples. Each will be discussed in turn, below.

### Retention Aids

An additive may be incorporated for the purpose of aiding in the binding of the applied colorant such as water-based ink jet colorants and/or dry or liquid toner formulations. Such additives are generally referred to as retention aids. Retention aids that have been found to bind colorants generally fall into three classes: silicas, latex polymer and polymer retention aids. Silicas and silicates are employed when the colorant is water-based such as ink jet formulations. An example of widely used silicas are the Ludox® (DuPont) brands. Polyvinyl alcohol represents as class of polymers that have also been applied to the binding of ink jet dyes. Other polymers used include anionic polymers such as Hercobond® 2000 (Hercules). Reten® 204LS (Hercules) and Kymene® 736 (Hercules) are catonic amine polymer-epichlorohydrin adducts used as retention aids. Latex polymers include, by way of illustration, vinyl polymers and vinyl co-polymer blends such as ethylene-vinyl acetate, styrene-butadiene copolymers, polyacrylate and other polyacrylate-vinyl copolymer blends. The retention aids are present in an amount of from 0.1 to 40% by weight, preferably 0.1 to 20%, more preferably from 0.1 to 10%.

### Wetting Agents and Rheology Modifiers

Wetting agents, rheology modifiers and surfactants may also be included in the Adhesion Layer. Such agents may either be nonionic, cationic or anionic. The surfactant selected should be compatible with the class of polymers used in a formulation. For example, anionic polymers require the use of anionic or non-ionic wetting agents or surfactants. Likewise, cationic surfactants are stable in polymer solutions containing cationic or non-ionic polymers. Examples of surfactants or wetting agents include, by way of illustration, alkylammonium salts of polycarboxylic acid, salts of unsaturated polyamine amides, derivatives of nonoxynol, derivatives of octoxynols (Triton® X-100 and Triton® X-114 (Union Carbide), for example), dimethicone copolymers, silicone glycol copolymers, polysiloxane-polyether copolymers, alkyl polyoxy carboxylates, fluoropolymers, tall oil fatting acids, ethylene oxide-propylene oxide block copolymers and derivatives of polyethylene glycol. The wetting agents are present in an amount of from 0.1 to 40% by weight, preferably 0.1 to 20%, more preferably from 0.1 to 10%.

Viscosity modifiers may also be included. Generally, various molecular weight polyethylene glycols are incorporated to serve this purpose. Polyethylene glycols used generally range in molecular weight from 100 to 500,000 with molecular weights between 200 and 1000 being the most useful in this application.

### Plasticizers

Plasticizers may be included in order to soften hard polymer and polymer blend additions. Plasticizers used include, by way of illustration, aromatic derivatives such as di-octyl phthalate, di-decyl phthalate derivatives and tri-2-ethylhexyl trimellitate. Aliphatic plasticizers include derivatives of ethylhexyl adipates and ethylhexyl sebacates. Epoxidized linseed or soya oils may also be incorporated but generally are not used due to yellowing and chemical instability upon heat application. The plasticizers are present in an amount of from 0.1 to 40% by weight, preferably 0.1 to 20%, more preferably from 0.1 to 10%.

### Water Repellants

Water repellent aids may also be incorporated into order to improve the wash/wear resistance of the image. Examples of additives include polyurethanes, wax dispersions such as carnauba wax, mineral waxes, montan wax, derivatives of montan wax, petroleum waxes, synthetic waxes such as polyethylene and oxidized polyethylene waxes, hydrocarbon resins, amorphous fluoropolymers and polysiloxane derivatives. The water repellents are present in an amount of from 0.1 to 40% by weight, preferably 0.1 to 20%, more preferably from 0.1 to 10%.

When the imaging method is a laser printer or copier, the Adhesion Layer used in the present invention preferably excludes wax dispersions derived from, for example, a group including but not limited to natural waxes such as carnauba wax, mineral waxes, montan wax, derivatives of montan wax, petroleum waxes, and synthetic waxes such as polyethylene and oxidized polyethylene waxes. If the imaging method is used in a nonlaser printer/copier method, waxes are not excluded from use in the material. However, the amount of waxes that may be present in the material of the invention when intended for use in laser printers or copiers must be sufficiently low as to avoid adverse affects on copier or printer operation. That is, the amount of wax present must not cause melting in the printer or copier.

The above properties make this particular embodiment of the Adhesion Layer highly suited for compatibilizing the stringent requirements of the electrostatic imaging process with the requirements of heat image technology to provide a product having good image quality and permanence under the demanding conditions of textile application, wear and wash resistance in use, and adhesion to wash resistance on decorated articles.

Additional suitable examples of the Adhesion Layers used in the invention are exemplified below.

In one embodiment of the invention, the Adhesion Layer comprises an ethylene acrylic acid co-polymer dispersion, an elastomeric emulsion, a polyurethane dispersion, and polyethylene glycol. An example of this embodiment is Adhesion Layer Formulation 1.

The acrylic dispersion is present in a sufficient amount so as to provide adhesion of the Adhesion Layer and image to the receptor element and is preferably present in an amount of from 46 to 90 weight %, more preferably 70 to 90 weight % based on the total composition of the Adhesion Layer.

The elastomeric emulsion provides the elastomeric properties such as mechanical stability, flexibility and stretchability, and is preferably present in an amount of from 1 to 45 weight %, more preferably 1 to 20 weight % based on the total composition of the Adhesion Layer.

The water repellent provides water resistance and repellency, which enhances the wear resistance and washability of the image on the receptor, and is preferably present in an amount of from 1 to 7 weight %, more preferably 3 to 6 weight % based on the total composition of the Adhesion Layer.

The plasticizer provides plasticity and antistatic properties to the transferred image, and is preferably present in an amount of from 1 to 8 weight %, more preferably 2 to 7 weight % based on the total composition of the Adhesion Layer.

Preferably, the acrylic dispersion is an ethylene acrylic acid co-polymer dispersion that is a film-forming binder that provides the "release" or "separation" from the support. The Adhesion Layer of the invention may utilize the film-forming binders of the image-receptive melt-transfer film layer of U.S. Patent 5,242,739.

Thus, the nature of the film-forming binder is not known to be critical. That is, any film-forming binder can be employed so long as it meets the criteria specified herein. As a practical matter, water-dispersible ethylene-acrylic acid copolymers have been found to be especially effective film forming binders.

The term "melts" and variations thereof are used herein only in a qualitative sense and are not meant to refer to any particular test procedure. Reference herein to a melting temperature or range is meant only to indicate an approximate temperature or range at which a polymer or binder melts and flows under the conditions of a melt-transfer process to result in a substantially smooth film.

Manufacturers' published data regarding the melt behavior of polymers or binders correlate with the melting requirements described herein. It should be noted, however, that either a true melting point or a softening point may be given, depending on the nature of the material. For example, materials such as polyolefins and waxes, being composed mainly of linear polymeric molecules, generally melt over a relatively narrow temperature range since they are somewhat crystalline below the melting point.

Melting points, if not provided by the manufacturer, are readily determined by known methods such as differential scanning calorimetry. Many polymers, and especially copolymers, are amorphous because of branching in the polymer chains or the side-chain constituents. These materials begin to soften and flow more gradually as the temperature is increased. It is believed that the ring and ball softening point of such materials, as determined by ASTM E-28, is useful in predicting their behavior. Moreover, the melting points or softening points described are better indicators of performance than the chemical nature of the polymer or binder.

Representative binders (i.e., acrylic dispersions) for release from the support are as follows:

### Binder A

Binder A is Michem® 58035, supplied by Michelman, Inc., Cincinnati, Ohio. This is a 35 percent solids dispersion of Allied Chemical's AC 580, which is approximately 10 percent acrylic acid and 90 percent ethylene. The polymer reportedly has a softening point of 102°C and a Brookfield viscosity of 0.65 pas (650 centipoise) at 140°C.

### Binder B

This binder is Michem® Prime 4983R (Michelman, Inc., Cincinnati, Ohio). The binder is a 25 percent solids dispersion of Primacor® 5983 made by Dow Chemical Company. The polymer contains 20 percent acrylic acid and 80 percent ethylene. The copolymer has a Vicat softening point of 43°C and a ring and ball softening point of 100°C. The melt index of the copolymer is 500 g/10 minutes (determined in accordance with ASTM D-1238).

### Binder C

Binder C is Michem® 4990 (Michelman, Inc., Cincinnati, Ohio). The material is 35 percent solids dispersion of Primacor® 5990 made by Dow Chemical Company. Primacor® 5990 is a copolymer of 20 percent acrylic acid and 80 percent ethylene. It is similar to Primacor® 5983 (see Binder B), except that the ring and ball softening point is 93°C. The copolymer has a melt index of 1,300 g/10 minutes and Vicat softening point of 39°C.

### Binder D

This binder is Michem® 37140, a 40 percent solids dispersion of a Hoechst-Celanese high density polyethylene. The polymer is reported to have a melting point of 100°C.

### Binder E

This binder is Michem® 32535 which is an emulsion of Allied Chemical Company's AC-325, a high density polyethylene. The melting point of the polymer is about 138°C. Michem® 32535 is supplied by Michelman, Inc., Cincinnati, Ohio.

### Binder F

Binder F is Michem® 48040, an emulsion of an Eastman Chemical Company microcrystalline wax having a melting point of 88°C. The supplier is Michelman, Inc., Cincinnati, Ohio.

### Binder G

Binder G is Michem® 73635M, an emulsion of an oxidized ethylene-based polymer. The melting point of the polymer is about 96°C. The hardness is about 4-6 Shore-D. The material is supplied by Michelman Inc., Cincinnati, Ohio.

The second component of Adhesion Layer Formulation 1 is an elastomeric emulsion, preferably a latex, and is compatible with the other components, and formulated to provide durability, mechanical stability, and a degree of softness and conformability to the layers.

Films of this material must have moisture resistance, low tack, durability, flexibility and softness, but with relative toughness and tensile strength. Further, the material should have inherent heat and light stability. The latex can be heat sensitized, and the elastomer can be self-crosslinking or used with compatible cross-linking agents, or both. The latex should be sprayable, or roll stable for continuous runnability on nip rollers.

Elastomeric latexes of the preferred type are produced from the materials and processes set forth in U.S. Patents 4,956,434 and 5,143,971. This curable latex is derived from a major amount of acrylate monomers such as C₄ to C₈ alkyl acrylate, preferably n-butyl acrylate, up to about 20 parts per hundred of total monomers of a monolefinically unsaturated dicarboxylic acid, most preferably itaconic acid, a small amount of crosslinking agent, preferably N-methyl acrylamide, and optionally another monolefinic monomer.

Using a modified semibatch process in which preferably the itaconic acid is fully charged initially to the reactor with the remaining monomers added over time, a latex of unique polymer architecture or morphology is created, leading to the unique rubbery properties of the cured films produced therefrom.

The third ingredient of Adhesion Layer Formulation 1 is a water resistant aid such as a polyurethane dispersion which provides a self-crosslinking solvent and emulsifier-free aqueous dispersion of an aliphatic urethane-acrylic hybrid polymer which, alone, produces a clear, crack-free film on drying having very good scratch, abrasion and chemical resistance. This ingredient is also a softener for the acrylic dispersion and plasticizer aid.

Such product may be produced by polymerizing one or more acrylate and other ethylenic monomers in the presence of an oligourethane to prepare oligourethane acrylate copolymers. The oligourethane is preferably prepared from diols and diisocyanates, the aliphatic or alicyclic based diisocyanates being preferred, with lesser amounts, if any, of aromatic diisocyanates, to avoid components which contribute to yellowing. Polymerizable monomers, in addition to the usual acrylate and methacrylate esters of aliphatic monoalcohols and styrene, further include monomers with carboxyl groups, such as acrylic acid or methacrylic acid, and those with other hydrophylic groups such as the hydroxyalkyl acrylates (hydroxyethyl methacrylate being exemplary). The hydrophylic groups in these monomers render the copolymer product dispersible in water with the aid of a neutralizing agent for the carboxyl groups, such as dimethylethanolamine, used in amount to at least partially neutralize the carboxyl groups after dispersion in water and vacuum distillation to remove any solvents used to prepare the urethane acrylic hybrid. Further formulations may include the addition of crosslinking components such as amino resins or blocked polyisocyanates. Although pigments and fillers could be added to any of the coating layers, such use to uniformly tint or color the coated paper could be used for special effect, but would not be used where an image is desired in the absence of background coloration. Urethane acrylic hybrid polymers are further described in U.S. 5,708,072.

Self crosslinking acrylic polyurethane hybrid compositions can also be prepared by the processes and materials of U.S. 5,691,425. These are prepared by producing polyurethane macromonomers containing acid groups and lateral vinyl groups, optionally terminal vinyl groups, and hydroxyl, urethane, thiourethane and/or urea groups. Polymerization of these macromonomers produces acrylic polyurethane hybrids which can be dispersed in water and combined with crosslinking agents for solventfree coating compositions.

Autocrosslinkable polyurethane-vinyl polymers are discussed in detail in 5,623,016 and U.S. 5,571,861. The products usually are polyurethane-acrylic hybrids, but with self-crosslinking functions. These may be carboxylic acid containing, neutralized with, e.g. tertiary amines such as ethanolamine, and form useful adhesives and coatings from aqueous dispersion.

The elastomeric emulsion and polyurethane dispersion are, generally, thermoplastic elastomers. Thermoplastic elastomeric polymers are polymer blends and alloys which have both the properties of thermoplastic polymers, such as having melt flow and flow characteristics, and elastomers, which are typically polymers which cannot melt and flow due to covalent chemical crosslinking (vulcanization). Thermoplastic elastomers are generally synthesized using two or more monomers that are incompatible; for example, styrene and butadiene. By building long runs of polybutadiene with intermittent polystyrene runs, microdomains are established which imparts the elastomeric quality to the polymer system. However, since the microdomains are established through physical crosslinking mechanisms, they can be broken by application of added energy, such as heat from a hand iron, and caused to melt and flow; and therefore, are elastomers with thermoplastic quality.

Thermoplastic elastomers have been incorporated into the present invention in order to provide the image system with elastomeric quality. Two thermoplastic elastomer systems have been introduced; that is, a polyacrylate terpolymer elastomer (for example, Hystretch® V-29) and an aliphatic urethane acryl hybrid (for example, Daotan® VTW 1265). Thermoplastic elastomers can be chosen from a group that includes, for example, ether-ester, olefinic, polyether, polyester and styrenic thermoplastic polymer systems. Specific examples include, by way of illustration, thermoplastic elastomers such as polybutadiene, polybutadiene derivatives, polyurethane, polyurethane derivatives, styrene-butadiene, styrenebutadiene-styrene, acrylonitrile-butadiene, acrylonitrilebutadiene-styrene, acrylonitrile-ethylene-styrene, polyacrylates, polychloroprene, ethylene-vinyl acetate and poly (vinyl chloride). Generally, thermoplastic elastomers can be selected from a group having a glass transitipn temperature (Tg) ranging from -50°C to 25°C.

The fourth component of Adhesion Layer Formulation 1 is a plasticizer such as a polyethylene glycol dispersion which provides mechanical stability, water repellency, and allows for a uniform, crack-free film. Accordingly, a reason to add the polyethylene glycol dispersion is an aid in the coating process. Further, the polyethylene glycol dispersion acts as a softening agent. A preferred fourth component is Carbowax® Polyethylene Glycol 400, available from Union Carbide.

An optional fifth ingredient of Adhesion Layer Formulation 1 is a surfactant and wetting agent such as polyethylene glycol mono ((tetramethylbutyl) phenol) ether.

Adhesion Layer Formulation 1, as a preferred embodiment of the invention when the imaging is performed by laser copiers and laser printers, is wax free.

In another embodiment of the invention, the Adhesion Layer comprises an acrylic binder and a wax emulsion. The Adhesion Layer may further contain a retention aid such as Hercobond 2000® . The retention aid provides water resistance, which enhances the washability of the image on the support. An example of this embodiment may be found in Adhesion Layer Formulation 2.

Alternatively, the binders suitable for Adhesion Layer Formulation 1 may be used in lieu of the above-described ethylene acrylic acid copolymer dispersion.

Formulation 2 works in a laser printer or copier despite the presence of wax since the wax is present in sufficiently low amounts so as to not adversely affect imaging such as, for example, by melting within the printer or copier (i.e., at most about 25 parts (weight)).

Another embodiment of the Adhesion Layers of the present invention include compositions comprising materials from U.S. Patent Nos. 5,501,902, 5,271,990 and 5,242,739. These patents are discussed in turn hereinbelow.

The Adhesion Layer of this embodiment may utilize the materials of the second layer of U.S. Patent No. 5,501,902.

This embodiment preferably includes particles of a thermoplastic polymer having largest dimensions of less than 50 micrometers, and preferably from 1 to 20 micrometers. The particles will more preferably have dimensions of from 2 to 10 micrometers. In general, the thermoplastic polymer can be any thermoplastic polymer which meets the criteria set forth herein. Desirably, the powdered thermoplastic polymer will be selected from the group consisting of polyolefins, polyesters, and ethylene-vinyl acetate copolymers.

The Adhesion Layer of this embodiment also includes from 10 to 50 weight percent of a film-forming binder, based on the weight of the thermoplastic polymer. Desirably, the amount of binder will be from 10 to 30 weight percent. In general, any film-forming binder may be employed which meets the criteria set forth herein. When the Adhesion Layer includes a cationic polymer, a nonionic or cationic dispersion or solution may be employed as the binder. Suitable binders include polyacrylates, polyethylenes, and ethylenevinyl acetate copolymers. The latter are particularly desired because of their stability in the presence of cationic polymers. The binder desirably will be heat softenable at temperatures of 120°Celsius or lower.

This embodiment of the Adhesion Layer desirably also will contain from 2 to 20 weight percent of a cationic polymer, based on the weight of the thermoplastic polymer. The cationic polymer may be, for example, an amide-epichlorohydrin polymer, polyacrylamides with cationic functional groups, polyethyleneimines, polydiallylamines, and the like. When a cationic polymer is present, a compatible binder should be selected. The binder desirably will be a nonionic binder, either in the form of a solution or a nonionic or cationic dispersion or emulsion. As is well known in the paper coating art, many commercially available binders have anionically charged particles or polymer molecules. These materials are generally not compatible with the cationic polymer which may be used in the present invention.

One or more other components may be used with this embodiment of the Adhesion Layer. For example, the Adhesion Layer may contain from 1 to 20 weight percent of a humectant, based on the weight of the thermoplastic polymer. Desirably, the humectant will be selected from the group consisting of ethylene glycol and poly(ethylene glycol). The poly(ethylene glycol) typically will have a weight average molecular weight of from 100 to 40,000. A poly(ethylene glycol) having a weight-average molecular weight of from 200 to 800 is particularly useful.

The Adhesion Layer also may contain from 0.2 to 10 weight percent of a fluid (e.g. ink) viscosity modifier, based on the weight of the thermoplastic polymer. The viscosity modifier desirably will be a poly(ethylene glycol) having a weight-average molecular weight of from 100,000 to 2,000,000. The poly(ethylene glycol) desirably will have a weight-average molecular weight of from 100,000 to 600,000.

Other components which may be present in the Adhesion Layer include from 0.1 to 5 weight percent of a weak acid and from 0.5 to 5 weight percent of a surfactant, both based on the weight of the thermoplastic polymer. A particularly useful weak acid is citric acid. The term "weak acid" is used herein to mean an acid having a dissociation constant less than one (or a negative log of the dissociation constant greater than 1).

The surfactant may be an anionic, a nonionic, or a cationic surfactant. When a cationic polymer is present in the Adhesion Layer, the surfactant should not be an anionic surfactant.

Desirably, the surfactant will be a nonionic or cationic surfactant. However, in the absence of the cationic polymer, an anionic surfactant may be used, if desired. Examples of anionic surfactants include, among others, linear and branched-chain sodium alkylbenzenesulfonates, linear and branched-chain alkyl sulfates, and linear and branched-chain alkyl ethoxy sulfates. Cationic surfactant include, by way of illustration, tallow trimethylammonium chloride. Examples of nonionic surfactants, include, again by way of illustration only, alkyl polyethoxylates, polyethoxylated alkylphenols, fatty acid ethanol amides, complex polymers of ethylene oxide, propylene oxide, and alcohols, and polysiloxane polyethers. More desirably, the surfactant will be a nonionic surfactant.

The Adhesion Layer may also utilize the materials from a melt-Adhesion Layer of the '902 patent. Such a melt-transfer film layer typically comprises a film forming binder, as already described, or other polymer. The layer desirably is applied by extrusion coating, but other methods also may be used. The Adhesion Layer desirably is formed from a polyethylene or a copolymer of ethylene with acrylic acid, methacrylic acid, vinyl acetate, or acrylic acid esters such as ethyl acrylate. The polymer desirably will have a melt flow rate of at least 30 grams per 10 minutes (g/10 minutes), as determined in accordance with ASTM Method D-1238, although the melt flow rate may be as high as 4,000 g/10 minutes. More desirably, the melt flow rate of the polymer will be from 300 to 700 g/10 minutes. The basis weight of the melt-transfer film layer desirably will be from 5 to 30 grams per square meter (g/m²).

The Adhesion Layer used in the invention may also correspond to the release layer of the '902 patent, which desirably will be a low molecular weight ethylene-acrylic acid copolymer applied from an aqueous dispersion. The melt flow rate of the ethylene acrylic acid copolymer desirably will be at least 200 g/10 minutes, more desirably from 800 to 1,200 g/10 minutes. Such dispersion also may contain a paraffin wax, which is mixed as an emulsion with the ethylene-acrylic acid copolymer dispersion. The paraffin wax emulsion can be any of those which are commercially available, such as Chemwax® 40 (Chematron, Inc., Charlotte, N.C.). The ratio of paraffin wax to the copolymer may vary from O to 4, with a ratio of 1 to 3 being more desirable. The basis weight of the adhesion layer desirably will be from 5 to 30 g/m². The basis weight of the adhesion layer may also desirably be from 5 to 100 g/m².

Accordingly, the Adhesion Layer used in the invention may comprise particles of a thermoplastic polymer preferably having largest dimensions of less than 50 micrometers, preferably from 1 to 20 micrometers, and more preferably from 2 to 10 micrometers, from 10 to 50 weight percent of a film-forming binder, based on the weight of the thermoplastic polymer, and from 0.2 to 10 weight percent of a viscosity modifier, based on the weight of the thermoplastic polymer.

The Adhesion Layer has a melting point of more than 65°C, preferably more than 100°C and more preferably from 100 to 180 degrees Celsius. The Adhesion Layer may also contain from 2 to 20 weight percent of a cationic polymer, based on the weight of the thermoplastic polymer. The Adhesion Layer may also contain from 1 to 20 weight percent of a humectant, based on the weight of the thermoplastic polymer. The humectant may be (1) ethylene glycol or (2) polyethylene glycol (e.g. having a weight-average molecular weight of from 100 to 40,000, preferably 200 to 800).

The viscosity modifier may be a polyethylene glycol having a weight average molecular weight of from 100,000 to 2,000,000, preferably from 100,000 to 600,000. The viscosity modifier may be low or high viscosity methyl cellulose or polyvinyl alcohol.

The Adhesion Layer may also include 0.1 to 5 weight percent of a weak acid, based on the weight of the thermoplastic polymer. The Adhesion Layer may also include 0.5 to 5 weight percent of a surfactant (e.g. nonionic or cationic), based on the weight of the thermoplastic polymer.

The Adhesion Layer may further comprise from 1 to 20 weight percent of a humectant, based on the weight of the thermoplastic polymer (and optionally from 0.2 to 10 weight percent of a fluid (e.g. ink) viscosity modifier, based on the weight of the thermoplastic polymer), and from 0.5 to 5 weight percent of a surfactant, based on the weight of the thermoplastic polymer.

The Adhesion Layer used in the present invention may also utilize the materials of the image receptive melt-transfer film layer of U.S. Patent 5,271,990.

In this embodiment, the Adhesion Layer may be comprised of a thermoplastic polymer which melts at above 65°C, preferably above 100°C, and more preferably in the range of from 100 to 180 degrees Celsius (°C). In another embodiment, the thermoplastic polymer melts in the range of from 80°C to 120°C, preferably from 100°C to 120°C.

The nature of the thermoplastic polymer is not known to be critical. That is, any known thermoplastic polymer can be employed so long as it meets the criteria specified herein. Preferably, the thermoplastic polymer is selected from the group consisting of polyolefins, polyesters, and ethylene-vinyl acetate copolymers, having a particle size of less than 50 micrometers, preferably having a particle size of less than 20, and more preferably less than 10 micrometers.

In general, the Adhesion Layer, corresponding to the melt-transfer film layer of the '990 patent, is comprised of a first thermoplastic polymer and the image receptive film layer is comprised of a second thermoplastic polymer, each of which melts above 65°C, preferably above 100°C, and more preferably in the range of from 100°C to 180°C. Preferably, the first thermoplastic polymer is selected from the group consisting of polyolefins, polyesters, ethylene-vinyl acetate copolymers, ethylene-methacrylic acid copolymers, and ethyleneacrylic acid copolymers. In addition, the second thermoplastic polymer preferably is selected from the group consisting of polyolefins, polyesters, and ethylene-vinyl acetate copolymers.

Again, reference herein to a melting temperature or range is meant only to indicate an approximate temperature or range at which a thermoplastic polymer melts and flows under film forming conditions to result in a substantially smooth film.

Accordingly, the Adhesion Layer may comprise a thermoplastic polymer selected from the group consisting of polyolefins, polyesters, and ethylene-vinyl acetate copolymers and which melts above 65°C, and preferably above 100°C, and more preferably in the range of from 100 to 180 degrees Celsius, and most preferably in the range of 100 to 120 degrees Celsius.

An example of the Adhesion Layer used in the invention is produced by coextruding a 25 micrometer film of Elvax® 3200 and a 19 micrometer film of Surlyn® 1702 as described in Example 1 of US Patent 5,271,990. Elvax® 3200 is supplied by E. I. Du Pont de Nemours & Company, Inc., Polymer Products Department, Ethylene Polymers Division, Wilmington, Del. Elvax® 3200 is an ethylene vinyl acetate copolymer containing approximately 25% vinyl acetate and modified with wax. It has a melt index of 32 g/10 minutes. Surlyn® 1702 is also supplied by DuPont. Surlyn® 1702 is an ionomer consisting of a cross-linked ethylene-methacrylic acid copolymer having a melt index of 14 g/10 minutes.

In another embodiment, the Adhesion Layer used in the present invention may also utilize the materials of the image-receptive melt-transfer film layer of U.S. Patent 5,242,739.

The Adhesion Layer may comprise from 15 to 80 percent by weight of a film-forming binder selected from the group consisting of ethylene-acrylic acid copolymers, polyolefins, and waxes and from 85 to 20 percent by weight of a powdered thermoplastic polymer selected from the group consisting of polyolefins, polyesters, polyamides, waxes, epoxy polymers, ethylene-acrylic acid copolymers, and ethylenevinyl acetate copolymers, wherein each of said film-forming binder and said powdered thermoplastic polymer melts above 65°C, preferably above 100, and more preferably in the range of from 100 to 180 degrees Celsius and said powdered thermoplastic is preferably of particles which are from 1 to 50 micrometers in diameter, preferably 2 to 50, and more preferably 1 to 20 micrometers in diameter.

Thus, the Adhesion Layer comprises from 15 to 80 percent by weight of a film-forming binder and from 85 to 20 percent by weight of a powdered thermoplastic polymer. Each of the film-forming binders and powdered thermoplastic polymers melt above 65°C, preferably above 100°C, and more preferably in the range of from 100 to 180 degrees Celsius (°C). In addition, the powdered thermoplastic polymer is preferably composed of particles having diameters of about 50 micrometers, more preferably from 2 to 50 micrometers, and most preferably from 1 to 20 micrometers.

In other embodiments, each of the film-forming binders and powered thermoplastic polymers melt in the range from 80°C to above 120°C, preferably in the range of from about 100°C to 120°C.

The function of the powdered thermoplastic polymer is to assist in the adhering of an image to a fabric, both in terms of ease of heat setting and the permanence of the transferred image.

The nature of the film-forming binder is not known to be critical. That is, any film-forming binder can be employed so long as it meets the criteria specified herein. In preferred embodiments, the film-forming binder has, at the transfer temperature, a lower melt viscosity than the powdered thermoplastic polymer. As a practical matter, water-dispersible ethylene-acrylic acid copolymers have been found to be especially effective film forming binders.

In general, the powdered thermoplastic polymer can be any thermoplastic polymer which meets the criteria set forth herein. Preferably, the powdered thermoplastic polymer is selected from the group consisting of polyolefins, polyesters, and ethylenevinyl acetate copolymers.

The Adhesion Layer, corresponding to the melt-transfer film layer, comprises a film-forming binder as already described. The image-receptive film layer preferably comprises from 15 to 80 percent by weight of a film-forming binder (e.g. ethylene-acrylic acid copolymers; polyolefins and waxes which melt in the range of about 65 to about 180 degrees Celsius). The melt Adhesion Layer may also contain from 85 to 20 percent by weight of a powdered thermoplastic polymer, each of which are as already defined.

As a general rule, the amount of powdered thermoplastic polymer employed can be reduced if larger particle sizes are employed.

If desired, any embodiment of the Adhesion Layer can contain other materials, such as processing aids, release agents, pigments, Reglossing agents, antifoam agents, and the like. The use of these and other like materials is well known to those having ordinary skill in the art.

Representative binders include Binders A-G discussed above and the following powdered thermoplastic polymers.

### Powdered Thermoplastic Polymer A

This powdered polymer is Microthene® FE 532, an ethylenevinyl acetate copolymer supplied by Quantum Industries, Cincinnati, Ohio. The particle size is reported to be 20 micrometers. The vicat softening point is 75°C and the melt index is 9 g/10 minutes.

### Powdered Thermoplastic Polymer B

Powdered Thermoplastic Polymer B is Aqua Polysilk® 19. It is a micronized polyethylene wax containing some polytetrafluoroethylene. The average particle size is 18 micrometers and the melting point of the polymer is 102°-118°C. The material is supplied by Micro Powders, Inc., Scarsdale, N.Y.

### Powdered Thermoplastic Polymer C

This material is Microthene® FN-500, a polyethylene powder supplied by USI Chemicals Co., Cincinnati, Ohio. The material has a particle size of 20 micrometers, a Vicat softening point of 83°C, and a melt index of 22 g/10 minutes.

### Powdered Thermoplastic Polymer D

This polymer is Aquawax® 114, supplied by Micro Powders, Inc., Scarsdale, N.Y. The polymer has a reported melting point of 91°-93°C and an average particle size of 3.5 micrometers; the maximum particle size is stated to be 13 micrometers.

### Powdered Thermoplastic Polymer E

Powdered Thermoplastic Polymer E is Corvel® 23-9030, a clear polyester from the Powder Coatings Group of the Morton Chemical Division, Morton Thiokol, Inc., Reading, Pa.

### Powdered Thermoplastic Polymer F

This material is Corvel® natural nylon 20-9001, also supplied by Morton Thiokol, Inc.

### Powdered Thermoplastic Polymer G

This polymer powder is Corvel® clear epoxy 13-9020, supplied by Morton Thiokol, Inc.

### Powdered Thermoplastic Polymer H

Powdered Thermoplastic Polymer H is AClyn® 246A, which has a melting temperature of about 95°C as determined by differential scanning calorimetry. The polymer is an ethyleneacrylic acid magnesium ionomer. The material is supplied by Allied-Signal, Inc., Morristown, N.J.

### Powdered Thermoplastic Polymer I

This polymer is AC-316A, an oxidized high density polyethylene. The material is supplied by Allied Chemical Company, Morristown, N.J.

### Powdered Thermoplastic Polymer J

This polymer is Texture 5380, supplied by Shamrock Technologies, Inc., Newark, N.J. It is powdered polypropylene having a melting point of 165°C and an average particle size of 40 micrometers.

The binders and thermoplastic polymers may be combined and blended as desired. For example, Binder A (e.g. 80 parts) may be blended with powdered thermoplastic polymer A (e.g. 80 parts) and optionally with a fluorocarbon dispersion such as Zonyl® 7040 (e.g. 0.20 parts) obtained from duPont. Another example includes combining Binder B (e.g. 400 parts) and Polymer B (e.g. 70 parts) and blending in a standard laboratory colloid mill. Also, Binder A (e.g. 286 parts) may be combined with Polymer C (e.g. 65 parts). Binder B (e.g. 400 parts) may be combined with Polymer D (e.g. 70 parts). Binder C (e.g. 200 parts) may be combined with Polymer E (e.g. 35 parts) and optionally with propylene glycol (e.g. 20 parts) and water (e.g. 20 parts). Similarly, Binder C (e.g. 200 parts) may be combined with Polymer F (e.g. 54 parts) and optionally with propylene glycol (e.g. 20 parts) and water (e.g. 20 parts). Also, Binder A (e.g. 200 parts) may be combined with Polymer G (e.g. 30 parts) and optionally with propylene glycol (e.g. 20 parts) and water (e.g. 20 parts). Binder D (e.g. 200 parts) may be combined with Polymer H (e.g. 30 parts) and optionally water (e.g. 40 parts) and blended. Binder A (e.g. 286 parts) may be combined with Polymer J (e.g. 40 parts) and optionally with propylene glycol (e.g. 50 parts).

When the PSA layer according to the present invention is used, any conventional adhesion layer may be employed. Moreover, this adhesion layer may be applied using any conventional method, for example, extrusion coating or water based coating. However, if the PSA layer according to the present invention is not employed, the adhesion layer should not be coated using extrusion coating, but rather using water based coating such as described in co-pending U.S. patent 6,358,660, filed April 21, 2000. Further, the surface energy difference parameters described above should be adhered to. In particular, when the PSA layer of the present invention is not employed, the surface energy difference between the selected barrier layer and the Adhesion Layer must be between about 0 to about 50 dynes/cm, preferably about 0 to about 30 dynes/cm, most preferably about 0 to about 15 dynes/cm (1 dyn = 10⁻⁵N).

### 5. Opaque Layer A

When one or more opaque layers are employed, the opaque layer supports the image receiving layer(s) and serves to render the image visible against a dark receptor, and otherwise improves the appearance and readability of an image, such as, for instance, a bar code or a color image.

Upon peeling, the label or heat setting material may carry some of the PSA along with the adhesive layers(s) and the opaque layer(s). For example, when permanently adhering the label to a textile, the opaque layer(s) layers preferably will be thermoplastic and optionally thermosetting as they are applied to a porous substrate such as a fabric. When a thermosettable formulation is employed for the pressure sensitive adhesive and/or opaque layers, the label fused into the fabric will have the maximum resistance to washing or dry cleaning.

The first optional opaque layer (Opaque layer A) adds a rigid or stiff quality to the entire heat-setting label sheet for ease of handling, as well as having a white (or colored) opacity. Any pigmented resin may be used to achieve the desired outcome.

A preferred embodiment of opaque layer A, Opaque Layer formulation 1 comprises styrene-butadiene latex, thermoplastic elastomer, an elastomer and an optional pigment.

All the above chemicals form a homogeneous dispersion aided by a stir bar at a low to medium stir rate. All mixing can be done at room temperature. After coating, the preferred thikness of Opaque Layer A is about 1.5 mils (38, 1 µm) (wet).

In the above-described preferred embodiment, a pigment such as a white pigment may be used to exhibit opacity capabilities. Also in the preferred embodiment, the latex is the primary chemical imparting the rigid characteristics upon drying. The thermoplastic elastomer and acrylonic copolymer impart stretchability and flexibility in the final transferred product.

### 6. Opaque Layer B

The optional Opaque Layer B preferably contains a pigment (such as a white pigment) and provides opacity. A preferred embodiment of the optional opaque layer B. Opaque Layer Formulation 1, comprises a vinyl acetate-ethylene copolymer, thermoplastic elastomer, an elastomer and an optional pigment such as TiO₂.

The thermoplastic elastomer acrylonitrile copolymer impart stretchability and flexibility in the final transferred product. Practically any TiO₂ powder addition, present at about 25% of the total formula, will provide the desired opacity. Other powdered pigments may need to be added at varying percentages to achieve the desired opacity and color intensity.

All liquid chemicals are homogenized in the presence of a stir bar and a low speed. Upon homogenization, the pigment powder is added slowly in the presence of a high stir speed provide by a stir flea. All mixing of the above ingredients should be performed at room temperature. Preferably, optional Opaque Layer B is coated on the heat setting label sheet at a weight of 1.0 to 1.5 mils (wet) (25,4 to 38,1 µm).

### 7. Image Receiving Layer

At least one of the coatings used in the present invention should be able to retain an image such as an image dye. However, when no opaque layer is used, as in a transparent label, and/or the Adhesion Layer is not capable of retaining a dye, the image receiving layer (IRL) used in the invention is required. The IRL retains dyes, such as ink from ink jet printers, or dyes from a waterbased marker. If an ink jet ink is utilized, the image preferably has comparable resolution to standard ink jet paper. After peeling and upon the application of heat, the Adhesion Layer, the opaque layer(s) if employed, and the optional IRL become heat activated (e.g. melt and flow) to trap or encapsulate the dye image or ink and optionally impart waterfast characteristics.

The IRL comprises binders, such as polyvinyl alcohol (PVOH), various colorant retention aids, and an antioxidant. An antioxidant is added to keep the polyvinyl alcohol (PVOH) from discoloring (yellowing) during the heat process.

Other polyvinyl alchols may be used which are considered to be of fully hydrolyzed (98.0 - 98.8% hydrolysis) or preferably super hydrolyzed grade (99.3+% hydrolysis).

Suitable antioxidants include, but are not limited to, BHA; Bis(2,4-di-t-butylphenyl)pentaerythritol diphosphite; 4,4'-Butylidenebis (6-t-butyl-m-cresol), C20-40 alcohols; p-Crescol/dicyclopentadiene butylated reaction product, Di (butyl, methyl pyrophosphato) ethylene titanate di (dioctyl, hydrogen phosphite); Dicyclo (dioctyl) pyrophosphato titanate; Di(dioctylphosphato) ethylene titanate; Di (dioctylpyrophosphato) ethylene titanate; Disobutyl nonyl phenol; Dimethylaminomethyl phenol, Ethylhydroxymethyloleyl oxazoline Isopropyl 4aminobenzenesulfonyl di (dodecylbenzenesulfonyl) titanate; Isopropyldimethacrylisoslearoyl titanate; Isopropyl (dioctylphosphato) titanate; isopropyltridioctylpyrophosphato) titanate; Isopropyl tri (N ethylamino-ethylamino) titanate, Lead phthalate, basic 2,2 -Methylenebis (6-t-butyl-4-methylphenol), Octadecyl 3,5-di-t-butyl-4-hydroxyhydrocinnamate Phosphorus; Phosphorus tnchloride, reaction prods. with 1,1'-biphenyl and 2,4-bis (1,1-dimethylethyl) phenol Tetra (2, diallyoxymethyl-1 butoxy titanium di (di-tridecyl) phosphite; Tetraisopropyl di (dioctylphosphito) titanate; Tetrakis [methylene (3,5-di-tbutyl-4-hydroxyhydrocinnamate)] methane; Tetraoctyloxytitanium; di (ditridecylphosphite); 4,4'-Thiobis6-(t-butyl-m-cresol); Titanium di (butyl, octyl pyrophosphate) di (diocLyl, hydrogen phosphite) oxyacetate; Titanium di (cumylphenylate) oxyacetate; Titanium di (dioctylpyrophosphate), oxyacelate; Titanium dimethyacrylate oxyacetate; 2,2,4-Trimethyl-1,2-dihydroquinoline polymer; Tris(nonylphenyl) phosphite.

Preferably, the antioxidant used is octadecyl 3,5-Di-tert-butyl-4-hydroxyhydrocinnamate. An aqueous solution of a cationic amine polymer-epichlorohydrin adduct acts as the dye retention aid. An additional binder is included in order to impart colorant retention and mechanical stability. A list of applicable binders include, but are not limited to, those listed in U.S. Patent No. 5,798,179, in addition to polyolefins, polyesters, ethylene-vinyl acetate copolymers, ethylene-methacrylate acid copolymers, and ethylene-acrylic acid copolymers. Suitable coating weight is in the range of 1.0 - 20.0 g/m² (dry), preferably in the range of 1.0 - 10 g/m² (dry).

Chemically, the IRL of the invention corresponds to virtually all known image receiving layers in the art of transfer images to t-shirts. However, the image receiving layer of the invention either does not melt when heat is applied or melts at a temperature above the melting temperature of the Adhesion Layer. Preferably, the image receiving layer does not melt below 260°C. Preferred Adhesion Layers of the present invention are known release layers assigned to or disclosed by Kimberly Clark Corporation, of Georgia, and Foto-Wear, Inc. of Milford, Pennsylvania.

The image receiving layer functions as a retention aid for the image. Accordingly, the image receiving layer should preferably be optimized depending on the marker that is being applied in accordance with the knowledge of one of ordinary skill in the art. Preferably, the image layer would contain polyethylene wax (Allied Signal, Acumist® A-12).

In an embodiment where the support is marked with a laser copier or printer, the optional image receiving layer is an acrylic coating upon which an image is applied. The image receiving layer may comprise a film-forming binder selected from the group comprising of ethylene-acrylic acid copolymers, polyolefins, and waxes. A preferred binder, especially when a laser copier or laser printer is used in accordance with this invention is an ethylene acrylic acid co-polymer dispersion. Such a dispersion is represented by Image Receiving Layer Formulation 2.

Alternatively, the binders suitable for Adhesion Layer Formulation 2 may be used in lieu of the above-described ethylene acrylic acid copolymer dispersion.

In another embodiment of the invention, when an ink jet printer is used in accordance with the present invention, the image receiving layer may utilize the materials of the fourth layer of U.S. Patent 5,798,179. Thus, for practicing the present invention using an ink jet printer, the image receiving layer may comprise particles of a thermoplastic polymer having largest dimensions of less than 50 micrometers. Preferably, the particles will have largest dimensions of less than 50 micrometers. More preferably, the particles will have largest dimensions of less than 20 micrometers. In general, the thermoplastic polymer may be any thermoplastic polymer which meets the criteria set forth herein. Desirably, the powdered thermoplastic polymer will be selected from the group consisting of polyolefins, polyesters, polyamides, and ethylene-vinyl acetate copolymers.

The Image Receiving Layer also includes from 10 to 50 weight percent of a film-forming binder, based on the weight of the thermoplastic polymer. Desirably, the amount of binder will be from 10 to 30 weight percent. In general, any film-forming binder may be employed which meets the criteria set forth herein. When the Image Receiving Layer includes a cationic polymer as described below, a nonionic or cationic dispersion or solution may be employed as the binder. Suitable binders include polyacrylates, polyethylenes, and ethylene-vinyl acetate copolymers. The latter are particularly desired because of their stability in the presence of cationic polymers. The binder desirably will be heat softenable at temperatures of about 120°C or lower.

The Image Receiving Layer typically will have a melting point of from 65°C to 180°C, but the selection thereof is subject to the limitation that it must melt at a higher melting temperature than the Adhesion Layer. Moreover, the image receiving layer may contain from 2 to 20 weight percent of a cationic polymer, based on the weight of the thermoplastic polymer. The cationic polymer may be, for example, an amide-epichlorohydrin polymer, polyacrylamides with cationic functional groups, polyethyleneimines, polydiallylamines, and the like. When a cationic polymer is present, a compatible binder should be selected, such as a nonionic or cationic dispersion or solution: As is well known in the paper coating art, many commercially available binders have anionically charged particles or polymer molecules. These materials are generally not compatible with the cationic polymer which may be used in the Image Receiving Layer.

One or more other components may be used in the Image Receiving Layer. For example, this layer may contain from 1 to 20 weight percent of a humectant, based on the weight of the thermoplastic polymer. Desirably, the humectant will be selected from the group consisting of ethylene glycol and poly(ethylene glycol). The poly(ethylene glycol) typically will have a weight-average molecular weight of from 100 to 40,000. A poly(ethylene glycol) having a weight-average molecular weight of from 200 to 800 is particularly useful.

The Image Receiving Layer also may contain from 0.2 to 10 weight percent of an ink viscosity modifier, based on the weight of the thermoplastic polymer. The viscosity modifier desirably will be a poly(ethylene glycol) having a weight-average molecular weight of from 100,000 to 2,000,000. The poly(ethylene glycol) desirably will have a weight-average molecular weight of from 100,000 to 600,000. Other components which may be present in the Image Receiving Layer include from 0.1 to 5 weight percent of a weak acid and from 0.5 to 5 weight percent of a surfactant, both based on the weight of the thermoplastic polymer. A particularly useful weak acid is citric acid. The term "weak acid" is used herein to mean an acid having a dissociation constant less than one (or a negative log of the dissociation constant greater than 1).

The surfactant may be an anionic, a nonionic, or a cationic surfactant. When a cationic polymer is present in the Image Receiving Layer, the surfactant should not be an anionic surfactant. Desirably, the surfactant will be a nonionic or cationic surfactant. However, in the absence of the cationic polymer, an anionic surfactant may be used, if desired. Examples of anionic surfactants include, among others, linear and branched-chain sodium alkylbenzenesulfonates, linear and branched-chain alkyl sulfates, and linear and branched-chain alkyl ethoxy sulfates. Cationic surfactants include, by way of illustration, tallow trimethylammonium chloride. Examples of nonionic surfactants, include, again by way of illustration only, alkyl polyethoxylates, polyethoxylated alkylphenols, fatty acid ethanol amides, complex polymers of ethylene oxide, propylene oxide, and alcohols, and polysiloxane polyethers. More desirably, the surfactant will be a nonionic surfactant.

The image receiving layer may contain the addition of filler agents with the purpose of modulating the surface characteristics of the present invention. The surface roughness and coefficient of friction may need to be modulated depending on such factors as desired surface gloss and the imaging device's specific paper feeding requirements. The filler can be selected from a group of polymers such as, for example, polyacrylates, polyacrylics, polyethylene, polyethylene acrylic copolymers and polyethylene acrylate copolymers, vinyl acetate copolymers and polyvinyl polymer blends that have various particle dimensions and shapes. Typical particle sizes may range from 0.1 to 500 µm. Preferably, the particle sizes range from 5 to 100 µm. More preferably, the particle sizes range from 5 to 30 µm. The filler may also be selected from a group of polymers such as, for example, cellulose, hydroxycellulose, starch and dextran. Silicas and mica may also be selected as a filler. The filler is homogeneously dispersed in the image layer in concentrations ranging from 0.1 to 50%. Preferably, the filler concentration range is 1 to 10 percent. Preferred image receiving layer formulations that further contain a filler agent are Image Receiving Layer Formulation 3 and 4.

As stated above, if an ink jet printer is used as the imaging mechanism, the image receiving layer retains ink from the ink jet printer with comparable resolution to a standard ink jet printer. The image receiving layer becomes heat activated to trap ink and impart wash characteristics. A preferred embodiment of the image receiving layer is Image Receiving Layer Formulation 5, which comprises a PVOH solution, an amine polymer, a thermoplastic polymer, a thermoplastic elastomer, and an antioxidant.

As stated above, an antioxidant is preferably added to keep the PVOH from discoloring or yellowing upon application of heat. The amine polymer acts as the dye retention/binder. Both thermoplastic chemicals allow the layer to fuse, or melt, thus trapping all inks onto the layer and imparting a water resistance upon heating. The elastomeric property is helpful in giving the layer flexibility and useful stretch characteristics so the final product does not tear or crack as easily.

The antioxidant powder is added to a specified amount of PVOH solution and heated to approximately 60°C and allowed to mix at medium speed for approximately 30 minutes. Upon incorporation of the antioxidant to the PVOH solution, the solution cools to room temperature, followed by incorporation of the remaining chemicals in the presence of a medium stir rate provided by a stir bar. Preferably, upon coating the image receiving layer will have a thickness of about 1.0 mil (25,4 µm) (wet).

In a preferred embodiment of the present invention, the image receiving layer according to WO 01/25856.

The various layers of the heat-setting label sheet are formed by known coating techniques, such as by curtain coating, Meyer rod, roll, blade, air knife, cascade and gravure coating procedures.

In a preferred embodiment of the invention, the first layer to be coated on the support is the pressure sensitive adhesive layer. The pressure sensitive adhesive layer, if present, is followed by the Adhesion Layer, and then the optional opaque layers(s) and the image receiving layer. If the pressure sensitive adhesive layer is not present, the first layer coated on the base will likely be a barrier layer.

In referring to Figure 1, there is generally illustrated a cross-sectional view of a heat-setting label sheet **20** of the present invention. The support **21** comprises a top and bottom surface. The pressure sensitive adhesive layer **22** is coated onto the top surface of the support **21**. The Adhesion Layer **23** is then coated onto the pressure sensitive adhesive layer **22**. The optional opaque layer(s) **24** are coated onto the Adhesion Layer. Finally, the image receiving layer **25** is coated on top of the opaque layer(s) **24**. Each component in the support coating plays a role in the transfer process. The pressure sensitive adhesive layer allows for easy removal or peeling of the heat sealing material (the label) solution. The Adhesion Layer effectively provides adhesion of subsequent layers and the printed image to the receptor. The opaque layer(s) provide opacity and rigidity to the heat-setting label sheet.

After the image receiving layer has completely dried, an antistatic agent discussed above may be applied to the noncoated side of the transfer sheet as an antistatic layer 26. The coating will help eliminate copier or printer jamming by preventing the electrostatic adhesion of the paper base to the copier drum of electrostatic copiers and printers.

### Additional Additives

Any of the layers of the heat-setting label sheet may further comprise an additive capable of emitting radiation within the visible light spectrum. The preferred layers for this additive are the adhesive layer and the image receiving layer, most preferably the release layer. For example, this additive may be organic, inorganic and/or organometallic compounds that have a quantum yield for fluorescence in the range of from 0.001 to 1.0. Alternatively, the additive may be organic, inorganic and/or an organometallic compounds that have a quantum yield for phosphorescence in the range of from 0.001 to 1.0. These additive systems may have radiative lifetimes of at least one nanosecond.

Examples of a suitable inorganic compound include those derived from lanthanide, alkali earth or transition metals which are reacted with elements of groups four, five or six of the Periodic Table. Additional examples of suitable inorganic compounds include those derived from members of the alkali earth or transition metals which are reacted with sulfur, thereby producing a luminescent sulfide complex. Examples of luminescent sulfide complexes include luminescent pigments such as zinc sulfide, copper sulfide, strontium sulfide or combinations thereof.

Examples of a suitable organic compound include aromatic and polycyclic aromatic compounds, such as coumarin, rhodamine, fluorescein and their derivatives, as well as 2,5-diphenyloxazole and 1,4-Bis(5-phenyloxazol-2-yl)benzene. Fluorescein derivatives and isomers may be the sodium salt forms, fluoresceinamine, diacetate and isothiocyanate. Coumarin isomers and derivatives include Coumarin-1, Coumarin-4, Coumarin-6, Coumarin-7, Coumarin-120, Coumarin-152, Coumarin-314, Coumarin-334, Coumarin-337, Coumarin-343 and carboxylated isomer derivatives. Rhodamine isomers and derivatives include rhodamine-123, rhodamine-B, rhodamine-B isocyanate, rhodamine-6G, rhodamine-6G perchlorate, rhodamine-6G tetrafluoroborate and rhodamine-110. The lactone derivatives of each of these may also be used.

Other systems include azo dyes such as CI Direct Yellow 86, CI Acid Red 249 and CI Direct Blue 199. Member dyes from the meracyanine, carbocyanine, indolene, imidazol, thiozole and oxazole class of compounds may also be selected. Organometallic systems may include metal containing substituted porphyrins, such as phthalocyanine complexed with members of the transition groups 6B, 8B, 1B and 2B. Porphyrin systems, such as Mesoporphyrin IX, complexed with the same transition element groups may also be selected.

The additives capable of emitting radiation within the visible light spectrum may be present at concentrations in the range of from 0.05% to 80%, preferably 0.05% to 20%, and most preferably 0.05% to 10% by dry weight.

### B. Receptor

The receptor or receiving element receives the transferred image. A suitable receptor includes but is not limited to textiles including cotton fabric, and cotton blend fabric. The receptor element may also include glass, metal, wool, plastic, ceramic or any other suitable receptor. Preferably the receptor element is a tee shirt or the like.

To transfer the image, the heat-setting label sheet is imaged by, for example, an ink jet printer. The heat sealing material (or label portion) is peeled away from the base and placed on the receptor element. A heating device (i.e., a hand iron or heat press) is used to apply heat and pressure to the support which in turn activates the heat-sealing material and the label adheres to the receptor. The temperature range of the hand iron is generally in the range of 110 to 220°C with about 190°C being the preferred temperature. The heat press operates at a temperature range of 100 to 220°C with about 190°C being the preferred temperature. The heating device is placed over the non-image side of the support and moved in a circular motion (hand iron only). Pressure (i.e., typical pressure applied during ironing) must be applied as the heating device is moved over the support (see Figure 1). After about two minutes to five minutes (with about three minutes being preferred) using a hand iron and 10 seconds to 50 seconds using a heat press (with about twenty seconds being preferred) of heat and pressure, the transfer device is removed from the support. Optionally, a sheet of paper of protective film may be placed in-between the label and heating device to protect the image and/or upper layers of the label from damage caused by the heating device during the heating period. As an alternative embodiment of the present invention, after the label portion of the heat-setting label sheet is placed on the receptor (i.e., a tee shirt), the label portion may be set by ironing the label indirectly (i.e., the back side of the tee shirt). That is, the heating is applied to the label through the tee shirt and not directly to the label.

In a preferred embodiment, the method of ironing as described in US patent 6,539,652 can be used.

The following examples are provided for a further understanding of the invention, however, the invention is not to be construed as limited thereto.

### EXAMPLE 1

An example of Barrier Layer Formulation 1 is as follows:

### Barrier Layer Formulation 1

| Components | Parts |
|---|---|
| Vinyl acetate-dibutyl maleate polymer dispersion (such as EVERFLEX® G. Hampshire Chemical Corporation) | 50 parts |
| Water | 50 parts. |

### EXAMPLE 2

An example of the PMMA-containing barrier layer is Barrier Layer Formulation 2:

### Barrier Layer Formulation 2

| Components | Parts |
|---|---|
| Acetone 99.5% | 40 parts (weight) |
| 2-Propanol 99.5%. PMMA 20 parts (weight). | 40 parts (weight) |

### EXAMPLE 3

### Pressure Sensitive Adhesive Layer Formulation 1

| Ingredient | Parts |
|---|---|
| Acrylic Polymer Adhesive (Grafix-2000® , Super-Tek Products Inc., Woodside, KY) | 95.0 |
| Water | 5.0 |

The Grafix-2000® as used above is diluted to a high viscosity. The two components mix in the presence of a stir bar at low stir speeds. The mixing is done at room temperature.

### EXAMPLE 4

An example of the Adhesion Layer of the present invention is as follows:

### Adhesion Layer Formulation 1

| Components | Parts by weight |
|---|---|
| Ethylene Acrylic Acid | 86 parts |
| Co-polymer Dispersion (Michem® Prime 4983R, Michelman) | |
| Elastomeric emulsion | 5 parts |
| (Hystretch® V-29, BFGoodrich) | |
| Polyurethane Dispersion (Daotan® VTW 1265, Vianova Resins) | 4 parts |
| Polyethylene Glycol (Carbowax® Polyethylene Glycol 400, Union Carbide) | 4 parts |
| Polyethylene Glycol Mono ((Tetramethylbutyl) Phenol) Ether (Triton® X-100, Union Carbide) | 1 part |

Adhesion Layer Formulation 1 may be prepared as follows: five parts of the elastomer dispersion are combined with eighty-six parts of an ethylene acrylic acid co-polymers dispersion by gentle stirring to avoid cavitation. Four parts of a polyurethane dispersion are then added to the mixture. Immediately following the addition of a polyurethane dispersion, four parts of a polyethylene glycol and one part of an nonionic surfactant (e.g., Triton® X-100) are added. The entire mixture is allowed to stir for approximately fifteen minutes at a moderate-stir rate (up to but not exceeding a rate where cavitation occurs). Once thoroughly combined, the mixture is filtered (for example, through a 53 µm nylon mesh).

### EXAMPLE 5

An additional example of the Adhesion Layer of the present invention is as follows:

### Adhesion Layer Formulation 2

| Components | Parts |
|---|---|
| Ethylene Acrylic Acid | 74 parts(weight) |
| Co-polymers dispersion (Michem® Prime 4938R, Michelman) | |
| Wax Dispersion (Michelman® 73635M, Michelman) | 25 parts(weight) |
| Retention Aid (Hercobond® 2000, Hercules) | 1 part(weight) |

Formulation 2 may be prepared in the following manner: the ethylene acrylic acid co-polymer dispersion and the wax dispersion are stirred (for example in a beaker with a stirring bar). The retention aid is added, and the stirring continues until the retention aid is completely dispersed.

### EXAMPLE 6

A more preferred embodiment of the Adhesion Layer is the following formulation:

### Adhesion Layer Formulation 3

| Ingredient | Parts |
|---|---|
| Ethylene Acrylic Acid (Michem® Prime 4983R, Michelman Corp.,Cincinatti, OH) | 66.0 |
| Acrylic Latex (Hycar® 26120, BF Goodrich, Cleveland, OH). | 33.0 |

In mixing, the above ingredients form a homogenous solution aided by the presence of a stir bar at a low to medium stir rate. The mixing may be performed at room temperature. Adhesion Layer Formulation 3 is preferably about 3.0 mils (76,2 µm) (wet) after coating.

### EXAMPLE 7

An example of Opaque Layer A is as follows:

### Opaque Layer A Formulation 1

| Ingredient | Parts |
|---|---|
| Sryrene-Butadiene Latex (Latex CP 615NA, Dow Chemical Co., Midland, MI) | 40 |
| Pigment in Resin Solution (Arrowvure F. Flink Ink CO., W. Hazelton, PA) | 25 |
| Thermoplastic Elastomer | 17.5 |
| (Hystretch® V-29, BF Goodrich, Cleveland, OH) | |
| Elastomer (Hycar® 1561, BF Goodrich, Cleveland, OH) | 17.5 |

### EXAMPLE 8

An example of Opaque Layer B is as follows:

### Opaque Layer B Formulation 1

| Ingrediant | Parts |
|---|---|
| Vinyl Acetate-Ethylene Copolymer (Airflex® 124, Airproducts Inc., Allentown, PA) | 35 |
| TiO2 Powder Pigment (TiPure® R706, DuPont Chemicals, Wilmington, DE) | 25 |
| Thermoplastic Elastomer (Hystretch® V-29, BF Goodrich, Cleveland, OH) | 25 |
| Elastomer (Hycar® 1561, BF Goodrich, Cleveland, OH). | 15 |

### EXAMPLE 9

A preferred Image receiving Layer is described below:

### IRL Formulation 1

| Ingredient | Parts |
|---|---|
| PVOH at a 5-15% solution in water (Airvol® 125, Airproduct Inc., Allentown, PA) | 55.00-90.00 |
| Amine polymer (Kymene® 450, Hercules Inc., Wilmington, DE) | 23.00-9.00 |
| Styrene Butadiene Latex (Latex XUR-YM-12274, Dow Chemical, Midland, MI) | 20.00-0.99 |
| Antioxidant (Irganox® 1076, Ciba Specialty Chemicals Tarrytown, NY) | 2.00-0.01 |

IRL formula 1 may be prepared as follows: In beaker A, the antioxidant powder is added to specified amount of PVOH solution, heated to approximately 60°C, and mixed at medium stir speed for approximately 30 minutes. Upon incorporation of the antioxidant to the PVOH solution, the solution is cooled to room temperature. In beaker B, the styrene butadiene latex and amine polymer are at a medium stir rate. The Beaker A contents are slowly added to Beaker B and allowed to homogenize in the presence of a medium stir rate. The solution may be filtered with a 50 - 150µ filter. By filtering the solution, undesired particulates can be separated from the bulk solution. The Adhesion Layer formula is coated at room temperature onto the support in a single pass of a #30 Meyer Rod and force air dried. The IL is coated directly onto the Adhesion Layer with a single pass of a #04 Meyer Rod, and force air dried.

### EXAMPLE 10

### Image Receiving Layer Formulation 2

| Components | Parts |
|---|---|
| Ethylene Acrylic Acid | 100 parts |
| Co-polymers Dispersion | |
| (Michem® Prime 4983R, Michelman). | |

### EXAMPLE 11

### Image Receiving Layer Formulation 3

| Compound | Parts |
|---|---|
| Ethylene Acrylic Copolymer Dispersion (Michem® 4983R, Michelman) | 90 to 99 |
| Ethylene Vinyl Acetate Copolymer Powder (Microthene® FE-532-00, Equistar Chemical) | 10 to 1 |

### EXAMPLE 12

### Image Receiving Layer Formulation 4

| Compound | Parts |
|---|---|
| Ethylene Acrylic Copolymer Dispersion (Michem® 4983R, Michelman) | 90 to 99 |
| Oxidized polyethylene homopolymer (ACumist® A-12, Allied Signal Chemical) | 10 to 1 |

### EXAMPLE 13

By way of illustration, the image receiving layer may optionally comprise the following formulation compositions:

### Formulation Description

- A: 100 parts OrgasolR® 3501 EXDNAT 1 (a 10-micrometer average particle size, porous, copolymer of nylon 6 and nylon 12 precursors), 25 parts Michem® Prime 4983, 5 parts Triton X100 and 1 part Methocel A-15 (methyl cellulose). The coating weight is 3.5 lb. per 1300 square feet.
- B: Like A, but with 5 parts of Tamol® 731 per 100 partsOrgasol® 3501, and the Metholcel® A-15 is omitted.
- C: Like a Reichold 97-635 release coat (a modified poly(vinyl acetate)), but containing 50 parts of Tone 0201 (a low molecular weight polycaprolactone) per 100 parts Orgasol® 3501.
- D: 100 parts Orgasol® 3501, 5 parts Tamol® 731, 25 parts Michel® Prime 4983 and 20 parts PEG 20M.
- E: 100 parts Orgasol® 3501, 5 parts Tamol® 731, 25 parts Michel® Prime 4983 and 5 parts PEG 20M (a polyethylene glycol having a molecular weight of 20,000).
- F: 100 parts Orgasol® 3501, 5 parts Tamol® 731, 25 parts Michem® Prime 4983 and 20 parts PEG 20M (an ethylene glycol oligomer having a molecular weight of 200).
- G: 100 parts Orgasol® 3501, 5 parts Tamol® 731 and 25 parts Sancor® 12676 (Sancor® 12676 is a heat sealable polyurethane).

### EXAMPLE 15

### Image Receiving Layer Formulation 5

| Compound | Parts |
|---|---|
| PVOH Solution (5% Airvol® 125 in water solution, Airproducts Inc., Allentown, PA) | 70 |
| Amine polymer (Kymene® 450, Hercules Inc., Wilmington, DE) | 15 |
| Thermoplastic Polymer (Picotex® LC-55WK, Hercules Inc., Wilmington, DE) | 9 |
| Thermoplastic Elastomer (Hystretch® V-29, BF Goodrich, Cleveland, OH) | 5 |
| Antioxidant (Irganox® 1076, Ciba Specialty Chemicals, Tarrytown, KY). | 1 |

### EXAMPLE 16

A heat-setting label sheet of the present invention is prepared as follows:

Pressure Sensitive Adhesive Layer Formulation 1 is prepared as described in Example 1 and is coated onto a silicone coated release base to a thickness of 0.4 mils (10,2 µm) (wet).

After the Pressure Sensitive Adhesive Layer dries, the Adhesion Layer of Example 6 is coated on top of the Pressure Sensitive Adhesive Layer to a thickness of 3 mils (76,2 µm) (wet) .

After the Adhesion Layer dries, Opaque Layer A as described in Example 7 is coated on top of the Pressure Sensitive Adhesive Layer to a thickness of 1.5 Mils (38,1 µm) (wet).

After Opaque Layer A dries, Opaque Layer B of Example 8 is coated Unstop of Opaque Layer A to a thickness of 1.5 mils (38,1 µm) (wet).

After Opaque layer B dries, Image Receiving Layer Formulation 1 as described in Example 9 18 coated onto Opaque Layer B to a thickness of 1.0 mil (25,4 µm) (wet).

After the Image Receiving Layer dries, the heat-setting label sheet is imaged using an ink jet printer and transferred.

### EXAMPLE 17

The heat-setting label sheet of Example 16 is transferred as follows:

The heat-setting label sheet is imaged using an ink jet printer. The Adhesion Layer, Opaque Layers, and the Image Receiving Layers (the label portion) are peeled away from the base and placed on a tee shirt Adhesion Layer down. Part of the Pressure Sensitive Adhesive Layer remains connected to the Adhesion Layer and helps to provide some tackiness that holds the label portion adhered to the substrate.

A hand iron on a high setting is used to apply heat to the label portion, which activates the heat-setting material and permanently adheres the label to the tee shirt. Typical pressure applied during ironing is applied to the label for a period of three minutes. Finally, the hand iron is removed from the tee shirt.

## Claims

1. A heat-setting label sheet, which comprises:
(i) a support;
(ii) a pressure sensitive adhesive layer comprising at least one of a polyester, acrylic polymer, or copolymer blend, said polyester, acrylic polymer or copolymer blend having a glass transition temperature (Tg) of less than 0 °C;
(iii) an Adhesion Layer comprising a thermoplastic polymer which melts in the range of 50-250 °C, a wax which melts in the range of 50-250 °C, or combinations thereof, wherein the adhesion layer is capable of being removed from the support without heat;
(iv) an optional opaque layer comprising a styrene-butadiene latex, thermoplastic polymer, elastomer and optional pigment;
(v) a second optional opaque layer comprising vinyl acetate-ethylene copolymer, thermoplastic elastomer, elastomer and optional pigment; and
(vi) an image receiving layer which comprises at least one polymer which is capable of receiving and retaining water base colorants.

2. The heat-setting label sheet claim 1, wherein said image receiving layer either does not melt when heat is applied or melts at a temperature above the melting temperature of the Adhesion Layer.

3. The heat-setting label sheet of claim 1, wherein said image receiving layer does not melt below 200 °C.

4. The heat-setting label sheet of claim 1, wherein said image receiving layer comprises polyvinyl alcohol, amine polymer, thermoplastic polymer, thermoplastic elastomer, and an antioxidant.

5. The heat-setting label sheet of claim 1, wherein said pressure sensitive adhesive layer comprises an acrylic polymer adhesive.

6. The heat-setting label sheet of claim 1, wherein said support is selected from the group consisting of a cellulosic nonwoven web and polyester film.

7. The heat-setting label sheet of claim 1, wherein said support is a silicone film.

8. The heat-setting label sheet of claim 1, wherein an adhesive is placed between the support and the Adhesion Layer.

9. The heat-setting label sheet of claim 1, wherein the Adhesion Layer comprises a thermoplastic polymer which melts in a range of from 65°C to 180°C and has a solubility parameter at least 19 (Mpa)^{1/2}.

10. The heat-setting label sheet of claim 2, wherein said image receiving layer further comprises an oxidized polyethylene homopolymer.

11. The heat-setting label sheet of claim 2, wherein said image receiving layer further comprises an ethylene vinyl acetate copolymer powder.

12. The heat-setting label sheet of claim 1, wherein the Adhesion Layer comprises a polymeric composition comprising: an acrylic dispersion, an elastomeric emulsion, a water repellent and a plasticizer.

13. The heat-setting label sheet of claim 1, wherein the Adhesion Layer comprises a polymeric composition comprising a film forming binder, an elastomeric emulsion, a water repellent and a plasticizer.

14. The heat-setting label sheet of claim 12, wherein said acrylic dispersion is an ethylene acrylic acid dispersion, said water repellent is a polyurethane dispersion and said plasticizer is a polyethylene glycol.

15. The heat-setting label sheet of claim 14, wherein said ethylene acrylic acid dispersion melts in the range of from 65°C to 180°C.

16. The heat-setting label sheet of claim 13, wherein said elastomeric emulsion has a Tg in the range of from -50°C to 25°C.

17. The heat-setting label sheet of claim 14, wherein said polyurethane dispersion has a Tg in the range of from -50°C to 25°C.

18. The heat-setting label sheet of claim 14, wherein said ethylene acrylic acid dispersion is present in an amount of from 46 to 90 parts by weight; said elastomeric emulsion is present in an amount of from 1 to 45 parts by weight; said polyurethane dispersion is present in an amount of from 1 to 7 parts by weight; and said polyethylene glycol is present in an amount of from 1 to 8 parts by weight.

19. The heat-setting label sheet of claim 14, wherein said ethylene acrylic acid dispersion is present in an amount of 86 parts by weight; said elastomeric emulsion is present in an amount of 5 parts by weight; said polyurethane dispersion is present in an amount of 4 parts by weight; and said polyethylene glycol is present in an amount of 4 parts by weight.

20. The heat-setting label sheet of claim 13, which further comprises a polyethylene glycol mono ((tetramethyl butyl) phenol) ester compound.

21. The heat-setting label sheet of claim 13, wherein the elastomeric emulsion is selected from the group consisting of polybutadiene, polybutadiene derivatives, polyurethane, polyurethane derivatives, styrene-butadiene, styrenebutadiene-styrene, acrylonitrile-butadiene, acrylonitrilebutadiene-styrene, acrylonitrile-ethylene-styrene, polyacrylates, polychloroprene, ethylene-vinyl acetate and poly (vinyl chloride).

22. The heat-setting label sheet of claim 13, wherein the film-forming binder is an acrylic dispersion.

23. The heat-setting label sheet of claim 13, wherein said film-forming binder is an acrylic dispersion, said water repellent is polyurethane dispersion and said plasticizer is a polyethylene glycol.

24. The heat-setting label sheet of claim 14, wherein said acrylic dispersion is an ethylene acrylic acid dispersion.

25. The heat-setting label sheet of claim 13, wherein the film-forming binder melts in the range of from 65°C to 180°C; said elastomeric emulsion has a Tg in the range of from -50°C to 25°C; and said polyurethane dispersion has a Tg in the range of from -50°C to 25°C.

26. The heat-setting label sheet of claim 13, which further comprises a polyethylene glycol.

27. The heat-setting label sheet of claim 13, wherein the film-forming binder is present in an amount of from 46 to 90 percent by weight; said elastomeric emulsion is present in an amount of from 1 to 45 percent by weight; said polyurethane dispersion is present in an amount of from 1 to 8 percent; and said Adhesion Layer further comprises polyethylene glycol in an amount of from 1 to 8 percent by weight.

28. The heat-setting label sheet of claim 2, wherein the image receiving layer comprises an ethylene acrylic acid copolymer dispersion.

29. The heat-setting label sheet of claim 13, wherein said film-forming binder is present in an amount of 86 percent by weight; said elastomeric emulsion is present in an amount of 5 percent by weight; said polyurethane dispersion is present in an amount of 4 percent; and said polyethylene glycol is present in an amount of 4 percent by weight.

30. The heat-setting label sheet of claim 29, wherein said polyethylene glycol comprises a polyethylene glycol mono ((tetramethyl butyl) phenol) ester compound.

31. The heat-setting label sheet of claim 13, wherein said elastomeric emulsion is selected from the group consisting of polybutadiene, polybutadiene derivatives, polyurethane, polyurethane derivatives, styrene-butadiene, styrene-butadiene-styrene, acrylonitrile-butadiene, acrylonitrile-butadiene-styrene, acrylonitrile-ethylene-styrene, polyacrylates, polychloroprene, ethylene-vinyl acetate and poly (vinyl chloride).

32. The heat-setting label sheet of claim 1, wherein said Adhesion Layer is present in a dry coat amount of from 5 to 30 g/m².

33. The heat-setting label sheet of claim 2, wherein said image receiving layer is present in a dry coat amount of from 1.0 to 40 g/m².

34. The heat-setting label sheet of claim 1, wherein the Adhesion Layer comprises a film-forming binder which melts in the range of from 65°C to 180°C; a wax dispersion; and a retention aid.

35. The heat-setting label sheet of claim 34, wherein the film-forming binder is selected from the group consisting of ethylene-acrylic acid copolymers, polyolefins, and waxes.

36. The heat-setting label sheet of claim 35, wherein the wax dispersion is selected from the group consisting of natural and synthetic waxes.

37. The heat-setting label sheet of claim 34, wherein the retention aid is selected from the group consisting of polyvinyl alcohols, polymer latexes and silicates.

38. The heat-setting label sheet of claim 1, wherein the Adhesion Layer has a melting point of at least 65°C and comprises (i) particles of a thermoplastic polymer having dimensions of 1 to 50 micrometers, from 10 to 50 weight percent of a film-forming binder, based on the weight of the thermoplastic polymer, and optionally from 0.2 to 10 weight percent of a fluid viscosity modifier, based on the weight of the thermoplastic polymer, (ii) 15 to 80 percent by weight of a film-forming binder selected from the group consisting of ethylene-acrylic acid copolymers, polyolefins, and waxes and from 85 to 20 percent by weight of a powdered thermoplastic polymer selected from the group consisting of polyolefins, polyesters, polyamides, waxes, epoxy polymers, ethylene-acrylic acid copolymers, and ethylenevinyl acetate copolymers, wherein each of said film-forming binder and said powdered thermoplastic polymer melts in the range of from 65°C to 180 degrees Celsius and the powdered thermoplastic polymer consists of particles of 1 to 50 micrometers, (iii) a film forming binder selected from the group consisting of ethylene-acrylic acid copolymers having particles of 1 to 50 micrometers, polyolefins, and waxes and which melts in the range of from 65°C to 180 degrees Celsius, (iv) a thermoplastic polymer having particles of 1 to 50 micrometers selected from the group consisting of polyolefins, polyesters, and ethylene-vinyl acetate copolymers and which melts in the range of from 65 to 180 degrees Celsius or, (v) a thermoplastic polymer having particles of 1 to 50 micrometers selected from the group consisting of polyolefins, polyesters, and ethylene-vinyl acetate copolymers, ethylenemethacrylic acid copolymers, and ethylene-acrylic acid copolymers and which melts in the range of from 65 to 180 degrees Celsius.

39. The heat-setting label sheet of claim 1, wherein the Adhesion Layer comprises particles of a thermoplastic polymer having dimensions of 1 to 20 micrometers.

40. The heat-setting label sheet of claim 1, wherein the Adhesion Layer comprises particles of a thermoplastic polymer having dimensions of 1 to 20 micrometers, from 10 to 50 weight percent of a film-forming binder, based on the weight of the thermoplastic polymer, and optionally from 0.2 to 10 weight percent of a fluid viscosity modifier, based on the weight of the thermoplastic polymer.

41. The heat-setting label sheet of claim 1, wherein the Adhesion Layer melts from 65 to 180 degrees Celsius and comprises particles of a thermoplastic polymer having dimensions of 1 to 20 micrometers, from 10 to 50 weight percent of a film-forming binder, based on the weight of the thermoplastic polymer, and from 2 to 20 weight percent of a cationic polymer, based on the weight of the thermoplastic polymer.

42. The heat-setting label sheet of claim 1, wherein the Adhesion Layer comprises from 15 to 80 percent by weight of a film-forming binder selected from the group consisting of ethylene-acrylic acid copolymers, polyolefins, and waxes and from 85 to 20 percent by weight of a powdered thermoplastic polymer selected from the group consisting of polyolefins, polyesters, polyamides, waxes, epoxy polymers, ethylene-acrylic acid copolymers, and ethylene-vinyl acetate copolymers, wherein each of said film-forming binder and said powdered thermoplastic polymer melts in the range of from 65 to 180 degrees Celsius and said powdered thermoplastic comprises particles which are from 1 to 50 micrometers in diameter.

43. The heat-setting label sheet of claim 1, wherein the Adhesion Layer comprises a film forming binder selected from the group consisting of ethylene-acrylic acid copolymers having particles of 1 to 20 micrometers, polyolefins, and waxes and which melts in the range of from 65 to 180 degrees Celsius.

44. The heat-setting label sheet of claim 1, wherein the Adhesion Layer comprises a thermoplastic polymer having particles of 1 to 20 micrometers selected from the group consisting of polyolefins, polyesters, and ethylene-vinyl acetate copolymers and which melts in the range of from 65 to 180 degrees Celsius.

45. The heat-setting label sheet of claim 1, wherein the Adhesion Layer comprises a thermoplastic polymer having particles of 1 to 50 micrometers selected from the group consisting of polyolefins, polyesters, and ethylene-vinyl acetate copolymers, ethylene-methacrylic acid copolymers, and ethylene-acrylic acid copolymers and which melts in the range of from 65 to 180 degrees Celsius.

46. A method of applying an image to a receptor element which comprises in the order (i)-(iv) the steps of:
(i) imaging a heat-setting label sheet, wherein said heat-setting label sheet comprises:
(a) a support;
a pressure sensitive adhesive layer comprising at least one of a polyester, acrylic polymer, or copolymer blend, said polyester, acrylic polymer, or copolymer blend having a glass transition temperature (Tg) of less than 0 °C; and
an Adhesion Layer comprising a thermoplastic polymer which melts in the range of 50-250 °C, a wax which melts in the range of 50-250 °C, or combinations thereof;
wherein said pressure sensitive adhesive layer is on the support and said Adhesion Layer is on the pressure sensitive adhesive layer;
or
b) a support;
a barrier layer coated on the support, said barrier layer comprising (1) a vinyl acetate with a Tg in the range of -10 °C to 100 °C; (2) a thermoplastic polymer having essentially no tack at transfer temperatures, a solubility parameter of at least 19 (Mpa)^{1/2}, and a glass transition temperature of at least 0 °C, or (3) thermosetting polymers, ultraviolet curing polymers, or
combinations thereof; and an Adhesion Layer coated on the barrier layer and comprising a thermoplastic polymer which melts in the range of 50-250 °C, a wax which melts in the range of 50-250 °C, or combinations thereof; and
(ii) peeling said image and Adhesion Layer from said support wherein said peeling occurs without water, heat, or chemical aids;
(iii) positioning the Adhesion Layer against said receptor element; and
(iv) applying heat to the Adhesion Layer.

47. The method of claim 46, wherein said imaging is provided by an electrostatic printer or copier.

48. The method of claim 46, wherein said imaging is provided by offset or screen printing.

49. The method of claim 46, wherein said imaging is provided by craft-type marking.

50. The method of claim 49, wherein said craft-type marking is selected from the group consisting of markers, crayons, paints or pens.

51. The method of claim 46, wherein said imaging is provided by ink jet printing.

52. The method of claim 46, wherein said heat-setting label sheet further comprises an opaque layer positioned on the Adhesion Layer, wherein said opaque layer comprises a styrene-butadiene latex, optional pigment, thermoplastic polymer, and elastomer.

53. The method of claim 52, wherein said heat-setting label sheet comprises a second opaque layer comprising vinyl acetate-ethylene copolymer, optional pigment, thermoplastic elastomer and elastomer, wherein said second opaque layer is coated on the opaque layer.

54. The method of claim 46, wherein said heat-setting label sheet comprises an image receiving layer coated on the Adhesion Layer which comprises at least one polymer which is capable of receiving and retaining water base colorants, said image receiving layer either does not melt when heat is applied or melts at a temperature above the melting temperature of the Adhesion Layer.

55. The method of claim 52, wherein said heat-setting label sheet comprises an image receiving layer coated on an opaque layer which comprises at least one polymer which is capable of receiving and retaining water base colorants, said image receiving layer either does not melt when heat is applied or melts at a temperature above the melting temperature of the Adhesion Layer.

56. The method of claim 53, wherein said heat-setting label sheet comprises an image receiving layer coated on said second opaque layer which comprises at least one polymer which is capable of receiving and retaining water base colorants, said image receiving layer either does not melt when heat is applied or melts at a temperature above the melting temperature of the Adhesion Layer.

57. The method of claim 46, wherein said heat is applied indirectly to the label.

58. The heat-setting label sheet of claim 1, wherein said Adhesion Layer is present in a dry coat amount of from 5 to 100 g/m².

59. A heat-setting label sheet, which comprises:
(i) a support;
(ii) a pressure sensitive adhesive layer comprising at least one of a polyester, acrylic polymer, or copolymer blend, said polyester, acrylic polymer or copolymer blend having a glass transition temperature (Tg) of less than 0 °C;
(iii) an Adhesion Layer comprising a thermoplastic polymer which melts in the range of 50-250 °C, a wax which melts in the range of 50-250 °C, or combinations thereof, wherein the adhesion layer is capable of being removed from the support without heat; and
(iv) at least one opaque layer comprising a pigment.

60. A heat-setting label sheet, which comprises:
(i) a support;
(ii) a pressure sensitive adhesive layer comprising at least one of a polyester, acrylic polymer or copolymer blend, said polyester, acrylic polymer or copolymer blend having a glass transition temperature (Tg) of less than 0 °C;
(iii) an Adhesion Layer comprising a thermoplastic polymer which melts in the range of 50-250 °C, a wax which melts in the range of 50-250 °C, or combinations thereof, wherein the adhesion layer is capable of being removed from the support without heat;
(iv) an optional opaque layer comprising a styrenebutadiene latex, thermoplastic polymer, elastomer and optional pigment;
(v) a second optional opaque layer comprising vinyl acetate-ethylene copolymer, thermoplastic elastomer, elastomer and optional pigment; and
(vi) an image layer.

61. The heat-setting label sheet according to claim 59, wherein said at least one opaque layer comprises one or both of the following (a) and (b):
(a) an opaque layer comprising a styrenebutadiene latex, thermoplastic polymer, elastomer and optional pigment; and/or
(b) an opaque layer comprising vinyl acetate-ethylene copolymer, thermoplastic elastomer, elastomer and optional pigment;
wherein at least one of opaque layers (a) or (b) contains a pigment.

## Patentansprüche

1. Wärmehärtbares Etikettenblatt umfassend:
(i) einen Träger;
(ii) eine druckempfindliche Klebschicht umfassend mindestens einen Polyester, ein Acrylpolymer oder einen Copolymer-Blend, wobei Polyester, Acrylpolymer oder Copolymer-Blend eine Glasübergangstemperatur (Tg) von weniger als 0 °C aufweisen;
(iii) eine Haftschicht umfassend ein thermoplastisches Polymer, welches im Bereich von 50 bis 250 °C schmilzt, ein Wachs, welches im Bereich von 50 bis 250 °C schmilzt, oder Kombinationen davon, wobei die Haftschicht ohne Anwendung von Wärme von dem Träger entfernt werden kann;
(iv) eine optionale undurchsichtige Schicht umfassend einen Styrol-Butadien-Latex, ein thermoplastisches Polymer, ein Elastomer und optional ein Pigment;
(v) eine zweite optionale undurchsichtige Schicht umfassend ein Vinylacetat-Ethylen-Copolymer, ein thermoplastisches Elastomer, ein Elastomer und optional ein Pigment; und
(vi) eine Bild aufnehmende Schicht, welche mindestens ein Polymer umfasst, welches wasserbasierte Farbmittel aufnehmen und behalten kann.

2. Wärmehärtbares Etikettenblatt nach Anspruch 1, wobei die Bild aufnehmende Schicht entweder nicht schmilzt, wenn Wärme angewendet wird, oder bei einer Temperatur oberhalb der Schmelztemperatur der Haftschicht schmilzt.

3. Wärmehärtbares Etikettenblatt nach Anspruch 1, wobei die Bild aufnehmende Schicht nicht unterhalb von 200 °C schmilzt.

4. Wärmehärtbares Etikettenblatt nach Anspruch 1, wobei die Bild aufnehmende Schicht Polyvinylalkohol, ein Aminpolymer, ein thermoplastisches Polymer, ein thermoplastisches Elastomer und ein Antioxidans umfasst.

5. Wärmehärtbares Etikettenblatt nach Anspruch 1, wobei die druckempfindliche Klebschicht einen Acrylpolymer-Klebstoff umfasst.

6. Wärmehärtbares Etikettenblatt nach Anspruch 1, wobei der Träger ausgewählt ist aus der Gruppe bestehend aus einem nicht gewebten Cellulosegewebe und einer Polyesterfolie.

7. Wärmehärtbares Etikettenblatt nach Anspruch 1, wobei der Träger eine Silikon-Folie ist.

8. Wärmehärtbares Etikettenblatt nach Anspruch 1, wobei zwischen dem Träger und der Haftschicht ein Klebstoff eingebracht ist.

9. Wärmehärtbares Etikettenblatt nach Anspruch 1, wobei die Haftschicht ein thermoplastisches Polymer umfasst, welches im Bereich von 65 °C bis 180 °C schmilzt und einen Löslichkeitsparameter von mindestens 19 (Mpa)^{1/2} aufweist.

10. Wärmehärtbares Etikettenblatt nach Anspruch 2, wobei die Bild aufnehmende Schicht weiterhin ein oxidiertes Polyethylen-Homopolymer umfasst.

11. Wärmehärtbares Etikettenblatt nach Anspruch 2, wobei die Bild aufnehmende Schicht weiterhin ein Ethylen-Vinylacetat-Copolymer-Pulver umfasst.

12. Wärmehärtbares Etikettenblatt nach Anspruch 1, wobei die Haftschicht eine Polymerzusammensetzung umfassend eine Acryldispersion, eine Elastomeremulsion, einen wasserabweisenden Stoff und einen Weichmacher umfasst.

13. Wärmehärtbares Etikettenblatt nach Anspruch 1, wobei die Haftschicht eine Polymerzusammensetzung umfassend ein filmbildendes Bindemittel, eine Elastomeremulsion, einen wasserabweisenden Stoff und einen Weichmacher umfasst.

14. Wärmehärtbares Etikettenblatt nach Anspruch 12, wobei die Acryldispersion eine Ethylen-Acrylsäure-Dispersion, der wasserabweisende Stoff eine Polyurethandispersion und der Weichmacher ein Polyethylenglykol sind.

15. Wärmehärtbares Etikettenblatt nach Anspruch 14, wobei die Ethylen-Acrylsäure-Dispersion im Bereich von 65 °C bis 180 °C schmilzt.

16. Wärmehärtbares Etikettenblatt nach Anspruch 13, wobei die Elastomeremulsion ein Tg im Bereich von -50 °C bis 25 °C aufweist.

17. Wärmehärtbares Etikettenblatt nach Anspruch 14, wobei die Polyurethandispersion ein Tg im Bereich von -50 °C bis 25 °C aufweist.

18. Wärmehärtbares Etikettenblatt nach Anspruch 14, wobei die Ethylen-Acrylsäure-Dispersion in einer Menge von 46 bis 90 Gewichtsteilen vorhanden ist; die Elastomeremulsion in einer Menge von 1 bis 45 Gewichtsteilen vorhanden ist; die Polyurethandispersion in einer Menge von 1 bis 7 Gewichtsteilen vorhanden ist; und Polyethylenglykol in einer Menge von 1 bis 8 Gewichtsteilen vorhanden ist.

19. Wärmehärtbares Etikettenblatt nach Anspruch 14, wobei die Ethylen-Acrylsäure-Dispersion in einer Menge von 86 Gewichtsteilen vorhanden ist; die Elastomeremulsion in einer Menge von 5 Gewichtsteilen vorhanden ist; die Polyurethandispersion in einer Menge von 4 Gewichtsteilen vorhanden ist; und Polyethylenglykol in einer Menge von 4 Gewichtsteilen vorhanden ist.

20. Wärmehärtbares Etikettenblatt nach Anspruch 13, welches weiterhin eine Polyethylenglykolmono((tetramethylbutyl)phenol)ester-Verbindung umfasst.

21. Wärmehärtbares Etikettenblatt nach Anspruch 13, wobei die Elastomeremulsion ausgewählt ist aus der Gruppe bestehend aus Polybutadien, Polybutadien-Derivaten, Polyurethanen, Polyurethan-Derivaten, Styrol-Butadien, Styrol-Butadien-Styrol, Acrylnitril-Butadien, Acrylnitril-Butadien-Styrol, Acrylnitril-Ethylen-Styrol, Polyacrylaten, Polychloropren, Ethylen-Vinylacetat und Polyvinylchlorid.

22. Wärmehärtbares Etikettenblatt nach Anspruch 13, wobei das filmbildende Bindemittel eine Acryldispersion ist.

23. Wärmehärtbares Etikettenblatt nach Anspruch 13, wobei das filmbildende Bindemittel eine Acryldispersion, der wasserabweisende Stoff eine Polyurethandispersion und der Weichmacher ein Polyethylenglykol sind.

24. Wärmehärtbares Etikettenblatt nach Anspruch 14, wobei die Acryldispersion eine Ethylen-Acrylsäure-Dispersion ist.

25. Wärmehärtbares Etikettenblatt nach Anspruch 13, wobei das filmbildende Bindemittel im Bereich von 65 °C bis 180 °C schmilzt; die Elastomeremulsion ein Tg im Bereich von -50 °C bis 25 °C aufweist; und die Polyurethandispersion ein Tg im Bereich von -50 °C bis 25 °C aufweist.

26. Wärmehärtbares Etikettenblatt nach Anspruch 13, welches weiterhin ein Polyethylenglykol umfasst.

27. Wärmehärtbares Etikettenblatt nach Anspruch 13, wobei das filmbildende Bindemittel in einer Menge von 46 bis 90 Gew.-% vorhanden ist; die Elastomeremulsion in einer Menge von 1 bis 45 Gew.-% vorhanden ist; die Polyurethandispersion in einer Menge von 1 bis 8 Gew.-% vorhanden ist; und die Haftschicht weiterhin ein Polyethylenglykol in einer Menge von 1 bis 8 Gew.-% umfasst.

28. Wärmehärtbares Etikettenblatt nach Anspruch 2, wobei die Bild aufnehmende Schicht eine Ethylen-Acrylsäure-Copolymer-Dispersion umfasst.

29. Wärmehärtbares Etikettenblatt nach Anspruch 13, wobei das filmbildende Bindemittel in einer Menge von 86 Gew.-% vorhanden ist; die Elastomeremulsion in einer Menge von 5 Gew.-% vorhanden ist; die Polyurethandispersion in einer Menge von 4 % vorhanden ist; und Polyethylenglykol in einer Menge von 4 Gew.-% vorhanden ist.

30. Wärmehärtbares Etikettenblatt nach Anspruch 29, wobei der Polyethylenglykol eine Polyethylenglykolmono((tetramethylbutyl)phenol)ester-Verbindung umfasst.

31. Wärmehärtbares Etikettenblatt nach Anspruch 13, wobei die Elastomeremulsion ausgewählt ist aus der Gruppe bestehend aus Polybutadien, Polybutadien-Derivaten, Polyurethanen, Polyurethan-Derivaten, Styrol-Butadien, Styrol-Butadien-Styrol, Acrylnitril-Butadien, Acrylnitril-Butadien-Styrol, Acrylnitril-Ethylen-Styrol, Polyacrylat, Polychloropren, Ethylen-Vinylacetat und Polyvinylchlorid.

32. Wärmehärtbares Etikettenblatt nach Anspruch 1, wobei die Haftschicht in einer Trockenbeschichtungsmenge von 5 bis 30 g/m² vorhanden ist.

33. Wärmehärtbares Etikettenblatt nach Anspruch 2, wobei die Bild aufnehmende Schicht in einer Trockenbeschichtungsmenge von 1,0 bis 40 g/m² vorhanden ist.

34. Wärmehärtbares Etikettenblatt nach Anspruch 1, wobei die Haftschicht ein filmbildendes Bindemittel, welches im Bereich von 65 °C bis 180 °C schmilzt, eine Wachsdispersion und ein Retentionshilfsmittel umfasst.

35. Wärmehärtbares Etikettenblatt nach Anspruch 34, wobei das filmbildende Bindemittel ausgewählt ist aus der Gruppe bestehend aus Ethylen-Acrylsäure-Copolymeren, Polyolefinen und Wachsen.

36. Wärmehärtbares Etikettenblatt nach Anspruch 35, wobei die Wachsdispersion ausgewählt ist aus der Gruppe bestehend aus natürlichen und synthetischen Wachsen.

37. Wärmehärtbares Etikettenblatt nach Anspruch 34, wobei das Retentionshilfsmittel ausgewählt ist aus der Gruppe bestehend aus Polyvinylalkoholen, Polymer-Latices und Silikaten.

38. Wärmehärtbares Etikettenblatt nach Anspruch 1, wobei die Haftschicht einen Schmelzpunkt von mindestens 65 °C aufweist und umfasst: (i) Teilchen aus einem thermoplastischen Polymer mit Abmessungen von 1 bis 50 Micrometern, 10 bis 50 Gew.-% eines filmbildenden Bindemittels, basierend auf dem Gewicht des thermoplastischen Polymers, und optional 0,2 bis 10 Gew.-% eines fluiden Viskositätsmodifizierers, basierend auf dem Gewicht des thermoplastischen Polymers, (ii) 15 bis 80 Gew.-% eines filmbildenden Bindemittels, ausgewählt aus der Gruppe bestehend aus Ethylen-Acrylsäure-Copolymeren, Polyolefinen und Wachsen, und 85 bis 20 Gew.-% eines gepulverten thermoplastischen Polymers, ausgewählt aus der Gruppe bestehend aus Polyolefinen, Polyestern, Polyamiden, Wachsen, Epoxy-Polymeren, Ethylen-Acrylsäure-Copolymeren und Ethylen-Vinylacetat-Copolymeren, wobei jedes der filmbildenden Bindemittel und gepulverten thermoplastischen Polymeren im Bereich von 65 °C bis 180 °C schmilzt, und das gepulverte thermoplastische Polymer aus Teilchen von 1 bis 50 Micrometem besteht, (iii) ein filmbildendes Bindemittel, ausgewählt aus der Gruppe bestehend aus Ethylen-Acrylsäure-Copolymeren mit Teilchen von 1 bis 50 Micrometern, Polyolefinen und Wachsen, und welches im Bereich von 65 °C bis 180 °C schmilzt, (iv) ein thermoplastisches Polymer mit Teilchen von 1 bis 50 Micrometern, ausgewählt aus der Gruppe bestehend aus Polyolefinen, Polyestern und Ethylen-Vinylacetat-Copolymeren, und welches im Bereich von 65 bis 180 °C schmilzt, oder (v) ein thermoplastisches Polymer mit Teilchen von 1 bis 50 Micrometern, ausgewählt aus der Gruppe bestehend aus Polyolefinen, Polyestern und Ethylen-Vinylacetat-Copolymeren, Ethylen-Methacrylsäure-Copolymeren und Ethylen-Acrylsäure-Copolymeren, und welches im Bereich von 65 bis 180 °C schmilzt.

39. Wärmehärtbares Etikettenblatt nach Anspruch 1, wobei die Haftschicht Teilchen aus einem thermoplastischen Polymer mit Abmessungen von 1 bis 20 Micrometern umfasst.

40. Wärmehärtbares Etikettenblatt nach Anspruch 1, wobei die Haftschicht Teilchen aus einem thermoplastischen Polymer mit Abmessungen von 1 bis 20 Micrometern, 10 bis 50 Gew.-% eines filmbildenden Bindemittels, basierend auf dem Gewicht des thermoplastischen Polymers, und optional 0,2 bis 10 Gew.-% eines fluiden Viskositätsmodifizierers, basierend auf dem Gewicht des thermoplastischen Polymers, umfasst.

41. Wärmehärtbares Etikettenblatt nach Anspruch 1, wobei die Haftschicht im Bereich von 65 bis 180 °C schmilzt und Teilchen aus einem thermoplastischen Polymer mit Abmessungen von 1 bis 20 Micrometern, 10 bis 50 Gew.-% eines filmbildenden Bindemittels, basierend auf dem Gewicht des thermoplastischen Polymers, und 2 bis 20 Gew.-% eines kationischen Polymers, basierend auf dem Gewicht des thermoplastischen Polymers, umfasst.

42. Wärmehärtbares Etikettenblatt nach Anspruch 1, wobei die Haftschicht 15 bis 80 Gew.-% eines filmbildenden Bindemittels, ausgewählt aus der Gruppe bestehend aus Ethylen-Acrylsäure-Copolymeren, Polyolefinen und Wachsen, und 85 bis 20 Gew.-% eines gepulverten thermoplastischen Polymers, ausgewählt aus der Gruppe bestehend aus Polyolefinen, Polyestern, Polyamiden, Wachsen, Epoxy-Polymeren, Ethylen-Acrylsäure-Copolymeren und Ethylen-Vinylacetat-Copolymeren, wobei jedes der filmbildenden Bindemittel und gepulverten thermoplastischen Polymeren im Bereich von 65 bis 180 °C schmilzt und das gepulverte thermoplastische Polymer Teilchen mit einem Durchmesser von 1 bis 50 Micrometern umfasst, umfasst.

43. Wärmehärtbares Etikettenblatt nach Anspruch 1, wobei die Haftschicht ein filmbildendes Bindemittel, ausgewählt aus der Gruppe bestehend aus Ethylen-Acrylsäure-Copolymeren mit Teilchen von 1 bis 20 Micrometern, Polyolefinen und Wachsen, und welches im Bereich von 65 bis 180 °C schmilzt, umfasst.

44. Wärmehärtbares Etikettenblatt nach Anspruch 1, wobei die Haftschicht ein thermoplastisches Polymer mit Teilchen von 1 bis 20 Micrometern, ausgewählt aus der Gruppe bestehend aus Polyolefinen, Polyestern und Ethylen-Vinylacetat-Copolymeren, und welches im Bereich von 65 bis 180 °C schmilzt, umfasst.

45. Wärmehärtbares Etikettenblatt nach Anspruch 1, wobei die Haftschicht ein thermoplastisches Polymer mit Teilchen von 1 bis 50 Micrometern, ausgewählt aus der Gruppe bestehend aus Polyolefinen, Polyestern und Ethylen-Vinylacetat-Copolymeren, Ethylen-Methacrylsäure-Copolymeren und Ethylen-Acrylsäure-Copolymeren, und welches im Bereich von 65 bis 180 °C schmilzt, umfasst.

46. Verfahren zum Aufbringen eines Bildes auf ein Empfängerelement, welches in der Abfolge (i)-(iv) die Schritte umfasst:
(i) Aufbringen eines Bildes auf ein wärmehärtbares Etikettenblatt, wobei das wärmehärtbare Etikettenblatt umfasst:
(a) einen Träger;
eine druckempfindliche Klebschicht umfassend mindestens einen Polyester, ein Acrylpolymer oder Copolymer-Blend, wobei der Polyester, das Acrylpolymer oder der Copolymer-Blend eine Glasübergangstemperatur (Tg) von weniger als 0 °C aufweisen; und
eine Haftschicht umfassend ein thermoplastisches Polymer, welches im Bereich von 50 bis 250 °C schmilzt, ein Wachs, welches im Bereich von 50 bis 250 °C schmilzt, oder Kombinationen davon;
wobei sich die druckempfindliche Klebschicht auf dem Träger befindet und die Haftschicht sich auf der druckempfindlichen Klebschicht befindet;
oder
(b) einen Träger;
eine Sperrschicht, welche auf den Träger aufgetragen ist, wobei die Sperrschicht umfasst (1) ein Vinylacetat mit einem Tg im Bereich von -10 °C bis 100 °C; (2) ein thermoplastisches Polymer, welches im Wesentlichen bei den Übertragungstemperaturen keine Klebrigkeit aufweist, einen Löslichkeitsparameter von mindestens 19 (Mpa)^{1/2} und eine Glasübergangstemperatur von mindestens 0 °C aufweist, oder (3) wärmehärtbare Polymere, UV-härtbare Polymere, oder Kombinationen davon;
eine Haftschicht, welche auf die Sperrschicht aufgetragen ist, und umfassend ein thermoplastisches Polymer, welches im Bereich von 50 bis 250 °C schmilzt, ein Wachs, welches im Bereich von 50 bis 250 °C schmilzt, oder Kombinationen davon; und
(ii) Ablösen des Bildes und der Haftschicht von dem Träger, wobei das Ablösen ohne Anwendung von Wasser, Wärme oder chemischen Hilfsstoffen geschieht;
(iii) Positionierung der Haftschicht gegen das Rezeptorelement; und
(iv) Anwendung von Wärme auf die Haftschicht.

47. Verfahren nach Anspruch 46, wobei das Bild durch einen elektrostatischen Drucker oder Kopierer aufgebracht wird.

48. Verfahren nach Anspruch 46, wobei das Bild durch Offset- oder Siebdruck aufgebracht wird.

49. Verfahren nach Anspruch 46, wobei das Bild durch Beschriftung von Hand aufgebracht wird.

50. Verfahren nach Anspruch 49, wobei die Beschriftungsmittel ausgewählt sind aus der Gruppe bestehend aus Markern, Buntstiften, Farben oder Zeichenstiften.

51. Verfahren nach Anspruch 46, wobei das Bild durch Ink-Jet-Druck aufgebracht wird.

52. Verfahren nach Anspruch 46, wobei das wärmehärtbare Etikettenblatt weiterhin eine undurchsichtige Schicht, welche sich auf der Haftschicht befindet, umfasst, wobei die undurchsichtige Schicht ein Styrol-Butadien-Latex, optional ein Pigment, ein thermoplastisches Polymer und ein Elastomer umfasst.

53. Verfahren nach Anspruch 52, wobei das wärmehärtbare Etikettenblatt eine zweite undurchsichtige Schicht, umfassend ein Vinylacetat-Ethylen-Copolymer, optional ein Pigment, ein thermoplastisches Elastomer und ein Elastomer umfasst, wobei die zweite undurchsichtige Schicht auf die undurchsichtige Schicht aufgetragen ist.

54. Verfahren nach Anspruch 46, wobei das wärmehärtbare Etikettenblatt eine Bild aufnehmende Schicht, welche auf die Haftschicht aufgetragen ist, umfasst, welche mindestens ein Polymer, das wasserbasierte Farbmittel aufnehmen und behalten kann umfasst, wobei die Bild aufnehmende Schicht entweder nicht schmilzt, wenn Wärme angewandt wird, oder bei einer Temperatur oberhalb der Schmelztemperatur der Haftschicht schmilzt.

55. Verfahren nach Anspruch 52, wobei das wärmehärtbare Etikettenblatt eine Bild aufnehmende Schicht, welche auf die undurchsichtige Schicht aufgetragen ist, umfasst, welche mindestens ein Polymer, das wasserbasierte Farbmittel aufnehmen und behalten kann, umfasst, wobei die Bild aufnehmende Schicht entweder nicht schmilzt, wenn Wärme angewandt wird, oder bei einer Temperatur oberhalb des Schmelzpunktes der Haftschicht schmilzt.

56. Verfahren nach Anspruch 53, wobei das wärmehärtbare Etikettenblatt eine Bild aufnehmende Schicht, welche auf die zweite undurchsichtige Schicht aufgetragen ist, umfasst, welche mindestens ein Polymer, das wasserbasierte Farbmittel aufnehmen und behalten kann, umfasst, wobei die Bild aufnehmende Schicht entweder nicht schmilzt, wenn Wärme angewandt wird, oder bei einer Temperatur oberhalb der Schmelztemperatur der Haftschicht schmilzt.

57. Verfahren nach Anspruch 46, wobei die Wärme indirekt auf das Etikettenblatt angewandt wird.

58. Wärmehärtbares Etikettenblatt nach Anspruch 1, wobei die Haftschicht, bezogen auf eine trockene Schicht, in einer Menge von 5 bis 100 g/m² vorhanden ist.

59. Wärmehärtbares Etikettenblatt, welches umfasst:
(i) einen Träger;
(ii) eine druckempfindliche Klebschicht umfassend mindestens einen Polyester, ein Acrylpolymer oder ein Copolymer-Blend, wobei der Polyester, das Acrylpolymer oder der Copolymer-Blend eine Glasübergangstemperatur (Tg) von weniger als 0 °C aufweisen;
(iii) eine Haftschicht umfassend ein thermoplastisches Polymer, welches im Bereich von 50 bis 250 °C schmilzt, ein Wachs, welches im Bereich von 50 bis 250 °C schmilzt, oder Kombinationen davon, wobei die Haftschicht ohne Anwendung von Wärme von dem Träger entfernt werden kann; und
(iv) mindestens eine undurchsichtige Schicht umfassend ein Pigment.

60. Wärmehärtbares Etikettenblatt, welches umfasst:
(i) einen Träger;
(ii) eine druckempfindliche Klebschicht umfassend mindestens einen Polyester, ein Acrylpolymer oder ein Copolymer-Blend, wobei der Polyester, das Acrylpolymer oder der Copolymer-Blend eine Glasübergangstemperatur (Tg) von weniger als 0 °C aufweisen;
(iii) eine Haftschicht umfassend ein thermoplastisches Polymer, welches im Bereich von 50 bis 250 °C schmilzt, ein Wachs, welches im Bereich von 50 bis 250 °C schmilzt, oder Kombinationen davon, wobei die Haftschicht von dem Träger ohne Anwendung von Wärme entfernt werden kann;
(iv) eine optionale undurchsichtige Schicht umfassend ein Styrol-Butadien-Latex, ein thermoplastisches Polymer, ein Elastomer und optional ein Pigment;
(v) eine zweite optionale undurchsichtige Schicht umfassend ein Vinylacetat-Ethylen-Copolymer, ein thermoplastisches Elastomer, ein Elastomer und optional ein Pigment;
und
(vi) eine Bildschicht.

61. Wärmehärtbares Etikettenblatt nach Anspruch 59, wobei die mindestens eine undurchsichtige Schicht eines oder beide der nachfolgenden (a) und (b) umfasst:
(a) eine undurchsichtige Schicht umfassend ein Styrol-Butadien-Latex, ein thermoplastisches Polymer, ein Elastomer und optional ein Pigment; und/oder
(b) eine undurchsichtige Schicht umfassend ein Vinylacetat-Ethylen-Copolymer, ein thermoplastisches Elastomer, ein Elastomer und optional ein Pigment;
wobei mindestens eine der undurchsichtigen Schichten (a) oder (b) ein Pigment enthält.

## Revendications

1. Feuille d'étiquette thermodurcissable, qui comprend :
(i) un support ;
(ii) une couche adhésive sensible à la pression comprenant au moins un polyester, un polymère acrylique, ou un mélange de copolymère, ledit polyester, polymère acrylique ou mélange de copolymère ayant une température de transition de verre (Tg) inférieure à 0 °C ;
(iii) une couche d'adhérence comprenant un polymère thermoplastique qui fond dans une plage comprise entre 50 °C et 250 °C, une cire qui fond dans une plage comprise entre 50 °C et 250 °C, ou des combinaisons de celles-ci, dans laquelle la couche d'adhérence peut être retirée du support sans apport de chaleur ;
(iv) une couche opaque facultative comprenant un latex styrène butadiène, un polymère thermoplastique, un élastomère et éventuellement une matière colorante;
(v) une seconde couche opaque facultative comprenant un copolymère d'éthylène acétate de vinyle, un élastomère thermoplastique, un élastomère et éventuellement une matière colorante; et
(vi) une couche de réception d'image qui comprend au moins un polymère qui est capable de recevoir et de retenir des colorants à base d'eau.

2. Feuille d'étiquette thermodurcissable selon la revendication 1, dans laquelle ladite couche de réception d'image ne fond pas quand de la chaleur y est appliquée ou fond à une température supérieure à la température de fusion de la couche d'adhérence.

3. Feuille d'étiquette thermodurcissable selon la revendication 1, dans laquelle ladite couche de réception d'image ne fond pas en dessous de 200 °C.

4. Feuille d'étiquette thermodurcissable selon la revendication 1, dans laquelle ladite couche de réception d'image comprend un alcool polyvinylique, un polymère amine, un polymère thermoplastique, un élastomère thermoplastique et un antioxydant.

5. Feuille d'étiquette thermodurcissable selon la revendication 1, dans laquelle ladite couche adhésive sensible à la pression comprend un adhésif polymère acrylique.

6. Feuille d'étiquette thermodurcissable selon la revendication 1, dans laquelle ledit support est choisi dans le groupe qui constitué par un voile non tissé cellulosique et un film de polyester.

7. Feuille d'étiquette thermodurcissable selon la revendication 1, dans laquelle ledit support est un film de silicone.

8. Feuille d'étiquette thermodurcissable selon la revendication 1, dans laquelle un adhésif est placé entre le support et la couche d'adhérence.

9. Feuille d'étiquette thermodurcissable selon la revendication 1, dans laquelle la couche d'adhérence comprend un polymère thermoplastique qui fond dans une plage comprise entre 65 °C et 180 °C et possède un paramètre de solubilité d'au moins 19 (Mpa)^{1/2}.

10. Feuille d'étiquette thermodurcissable selon la revendication 2, dans laquelle ladite couche de réception d'image comprend de plus un homopolymère de polyéthylène oxydé.

11. Feuille d'étiquette thermodurcissable selon la revendication 2, dans laquelle ladite couche de réception d'image comprend de plus une poudre de copolymère d'éthylène-acétate de vinyle.

12. Feuille d'étiquette thermodurcissable selon la revendication 1, dans laquelle la couche d'adhérence comprend une composition polymère comprenant : une dispersion acrylique, une émulsion élastomère, un hydrofuge et un plastifiant.

13. Feuille d'étiquette thermodurcissable selon la revendication 1, dans laquelle la couche d'adhérence comprend une composition polymère comprenant un liant formant un film, une émulsion élastomère, un hydrofuge et un plastifiant.

14. Feuille d'étiquette thermodurcissable selon la revendication 12, dans laquelle ladite dispersion acrylique est une dispersion d'acide acrylique éthylène, ledit hydrofuge est une dispersion de polyuréthane et ledit plastifiant est un polyéthylène glycol.

15. Feuille d'étiquette thermodurcissable selon la revendication 14, dans laquelle ladite dispersion d'acide acrylique éthylène fond dans une plage comprise entre 65 °C et 180 °C.

16. Feuille d'étiquette thermodurcissable selon la revendication 13, dans laquelle ladite émulsion élastomère possède une Tg située dans une plage comprise entre - 50 °C et 25 °C.

17. Feuille d'étiquette thermodurcissable selon la revendication 14, dans laquelle ladite dispersion de polyuréthane possède une Tg située dans une plage comprise entre - 50 °C et 25 °C.

18. Feuille d'étiquette thermodurcissable selon la revendication 14, dans laquelle ladite dispersion d'acide acrylique éthylène est présente dans une quantité comprise entre 46 et 90 parties en poids ; ladite émulsion élastomère est présente dans une quantité comprise entre 1 et 45 parties en poids ; ladite dispersion de polyuréthane est présente dans une quantité comprise entre 1 et 7 parties en poids ; et ledit polyéthylène glycol est présent dans une quantité comprise entre 1 et 8 parties en poids.

19. Feuille d'étiquette thermodurcissable selon la revendication 14, dans laquelle ladite dispersion d'acide acrylique éthylène est présente dans une quantité de 86 parties en poids ; ladite émulsion élastomère est présente dans une quantité de 5 parties en poids ; ladite dispersion de polyuréthane est présente dans une quantité de 4 parties en poids ; et ledit polyéthylène glycol est présent dans une quantité de 4 parties en poids.

20. Feuille d'étiquette thermodurcissable selon la revendication 13, qui comprend de plus un composé mono ester polyéthylène glycol ((tétraméthyl butyle) phénol).

21. Feuille d'étiquette thermodurcissable selon la revendication 13, dans laquelle l'émulsion élastomère est choisie dans le groupe comprenant le polybutadiène, les dérivés du polybutadiène, le polyuréthane, les dérivés du polyuréthane, le styrène-butadiène, le styrène-butadiène-styrène, l'acrylonitrile-butadiène, l'acrylonitrile-butadiène-styrène, l'acrylonitrile-éthylène-styrène, les polyacrylates, le polychloroprène, l'acétate éthylène-vinyle et le poly (chlorure de vinyle).

22. Feuille d'étiquette thermodurcissable selon la revendication 13, dans laquelle le liant formant un film est une dispersion acrylique.

23. Feuille d'étiquette thermodurcissable selon la revendication 13, dans laquelle ledit liant formant un film est une dispersion acrylique, ledit hydrofuge est une dispersion de polyuréthane et ledit plastifiant est un polyéthylène glycol.

24. Feuille d'étiquette thermodurcissable selon la revendication 14, dans laquelle ladite dispersion acrylique est une dispersion d'acide acrylique éthylène.

25. Feuille d'étiquette thermodurcissable selon la revendication 13, dans laquelle le liant formant un film fond dans une plage comprise entre 65 °C et 180 °C ; ladite émulsion élastomère a une Tg située dans une plage comprise entre - 50 °C et 25 °C ; et ladite dispersion de polyuréthane a une Tg située dans une plage comprise entre - 50 °C et 25 °C.

26. Feuille d'étiquette thermodurcissable selon la revendication 13, qui comprend de plus un polyéthylène glycol.

27. Feuille d'étiquette thermodurcissable selon la revendication 13, dans laquelle le liant formant un film est présent dans une quantité comprise entre 46 et 90 pour cent en poids ; ladite émulsion élastomère est présente dans une quantité comprise entre 1 et 45 pour cent en poids ; ladite dispersion de polyuréthane est présente dans une quantité comprise entre 1 et 8 pour cent en poids ; et ladite couche d'adhérence comprend de plus du polyéthylène glycol dans une quantité comprise entre 1 et 8 pour cent en poids.

28. Feuille d'étiquette thermodurcissable selon la revendication 2, dans laquelle la couche de réception d'image comprend une dispersion de copolymère d'acide acrylique éthylène.

29. Feuille d'étiquette thermodurcissable selon la revendication 13, dans laquelle ledit liant formant un film est présent dans une quantité de 86 pour cent en poids ; ladite émulsion élastomère est présente dans une quantité de 5 pour cent en poids ; ladite dispersion de polyuréthane est présente dans une quantité de 4 pour cent ; et ledit polyéthylène glycol est présent dans une quantité de 4 pour cent en poids.

30. Feuille d'étiquette thermodurcissable selon la revendication 29, dans laquelle ledit polyéthylène glycol comprend un composé mono ester polyéthylène glycol ((tétraméthyl butyle) phénol).

31. Feuille d'étiquette thermodurcissable selon la revendication 13, dans laquelle ladite émulsion élastomère est choisie dans le groupe comprenant le polybutadiène, les dérivés du polybutadiène, le polyuréthane, les dérivés du polyuréthane, le styrène-butadiène, le styrène-butadiène-styrène, l'acrylonitrile-butadiène, l'acrylonitrile-butadiène-styrène, l'acrylonitrile-éthylène-styrène, les polyacrylates, le polychloroprène, l'acétate éthylène-vinyle et le poly (chlorure de vinyle).

32. Feuille d'étiquette thermodurcissable selon la revendication 1, dans laquelle ladite couche d'adhérence est présente dans une quantité d'enrobage à sec comprise entre 5 g / m² et 30 g / m².

33. Feuille d'étiquette thermodurcissable selon la revendication 2, dans laquelle ladite couche de réception d'image est présente dans une quantité d'enrobage à sec comprise entre 1.0 g / m² et 40 g / m².

34. Feuille d'étiquette thermodurcissable selon la revendication 1, dans laquelle la couche d'adhérence comprend un liant formant un film qui fond dans une plage comprise entre 65 °C et 180 °C ; une dispersion de cire; et un adjuvant de fixation.

35. Feuille d'étiquette thermodurcissable selon la revendication 34, dans laquelle le liant formant un film est choisi dans le groupe constitué par les copolymères d'acide acrylique éthylène, des polyoléfines et des cires.

36. Feuille d'étiquette thermodurcissable selon la revendication 35, dans laquelle la dispersion de cire est choisie dans le groupe constitué par les cires naturelles et synthétiques.

37. Feuille d'étiquette thermodurcissable selon la revendication 34, dans laquelle l'adjuvant de fixation est choisi dans le groupe constitué par les alcools polyvinyliques, les latex polymères et les silicates.

38. Feuille d'étiquette thermodurcissable selon la revendication 1, dans laquelle la couche d'adhérence a un point de fusion d'au moins 65 °C et comprend (i) des particules d'un polymère thermoplastique ayant des dimensions comprises entre 1 et 50 micromètres, de 10 à 50 pour cent en poids d'un liant formant un film, sur base du poids du polymère thermoplastique, et de manière facultative de 0.2 à 10 pour cent en poids d'un modificateur de viscosité de fluide, sur base du poids du polymère thermoplastique, (ii) 15 à 80 pour cent en poids d'un liant formant un film choisi dans le groupe composé des copolymères d'acide acrylique éthylène, des polyoléfines et des cires et de 85 à 20 pour cent en poids d'un polymère thermoplastique en poudre choisi dans le groupe composé des polyoléfines, des polyesters, des polyamides, des cires, des polymères époxydes, des copolymères d'acide acrylique éthylène, et des copolymères d'acétate de vinyle éthylène, dans laquelle chacun dudit liant formant un film et dudit polymère thermoplastique en poudre fond à une température située dans la plage comprise entre 65 °C et 180 degrés Celsius et le polymère thermoplastique en poudre se compose de particules de 1 à 50 micromètres, (iii) un liant formant un film choisi dans le groupe composé des copolymères d'acide acrylique éthylène ayant des particules de 1 à 50 micromètres, des polyoléfines et des cires et qui fond à une température située dans la plage comprise entre 65 °C et 180 degrés de Celsius, (iv) un polymère thermoplastique ayant des particules de 1 à 50 micromètres choisi dans le groupe composé des polyoléfines, des polyesters, et des copolymères d'acétate de vinyle éthylène et qui fond à une température située dans la plage comprise entre 65 °C à 180 degrés Celsius ou, (v) un polymère thermoplastique ayant des particules de 1 à 50 micromètres choisi dans le groupe composé des polyoléfines, des polyesters, et des copolymères d'acétate de vinyle éthylène, des copolymères d'acide méthacrylique éthylène, et des copolymères d'acide acrylique éthylène et qui fond à une température située dans la plage comprise entre 65 °C et 180 degrés Celsius.

39. Feuille d'étiquette thermodurcissable selon la revendication 1, dans laquelle la couche d'adhérence comprend des particules d'un polymère thermoplastique ayant des dimensions comprises entre 1 et 20 micromètres.

40. Feuille d'étiquette thermodurcissable selon la revendication 1, dans laquelle la couche d'adhérence comprend des particules d'un polymère thermoplastique ayant des dimensions comprises entre 1 et 20 micromètres, de 10 à 50 pour cent en poids d'un liant formant un film, sur la base du poids du polymère thermoplastique, et de manière facultative de 0.2 à 10 pour cent en poids d'un modificateur de viscosité de fluide, sur la base du poids du polymère thermoplastique.

41. Feuille d'étiquette thermodurcissable selon la revendication 1, dans laquelle la couche d'adhérence fond à une température située dans la plage comprise entre 65 et 180 degrés Celsius et comprend des particules d'un polymère thermoplastique ayant des dimensions comprises entre 1 et 20 micromètres, de 10 à 50 pour cent en poids d'un liant formant un film, sur la base du poids du polymère thermoplastique, et de 2 à 20 pour cent en poids d'un polymère cationique, sur la base du poids du polymère thermoplastique.

42. Feuille d'étiquette thermodurcissable selon la revendication 1, dans laquelle la couche d'adhérence comprend de 15 à 80 pour cent en poids d'un liant formant un film choisi dans le groupe composé des copolymères d'acide acrylique éthylène, des polyoléfines et des cires et de 85 à 20 pour cent en poids d'un polymère thermoplastique en poudre choisi dans le groupe composé des polyoléfines, des polyesters, des polyamides, des cires, des polymères époxydes, des copolymères d'acide acrylique éthylène, et des copolymères d'acétate de vinyle éthylène, dans laquelle chacun dudit liant formant un film et dudit polymère thermoplastique en poudre fond à une température située dans la plage comprise entre 65 et 180 degrés Celsius et ledit thermoplastique en poudre comprend des particules qui ont un diamètre compris entre 1 et 50 micromètres.

43. Feuille d'étiquette thermodurcissable selon la revendication 1, dans laquelle la couche d'adhérence comprend un liant formant un film choisi dans le groupe composé des copolymères d'acide acrylique éthylène ayant des particules de 1 à 20 micromètres, des polyoléfines et des cires et qui fond à une température située dans la plage comprise entre 65 et 180 degrés Celsius.

44. Feuille d'étiquette thermodurcissable selon la revendication 1, dans laquelle la couche d'adhérence comprend un polymère thermoplastique ayant des particules de 1 à 20 micromètres choisi dans le groupe composé des polyoléfines, des polyesters et des copolymères d'acétate de vinyle éthylène et qui fond à une température située dans la plage comprise entre 65 et 180 degrés Celsius.

45. Feuille d'étiquette thermodurcissable selon la revendication 1, dans laquelle la couche d'adhérence comprend un polymère thermoplastique ayant des particules de 1 à 50 micromètres choisi dans le groupe composé des polyoléfines, des polyesters, des copolymères d'acétate de vinyle éthylène, des copolymères d'acide méthacrylique éthylène et des copolymères d'acide acrylique éthylène et qui fond à une température située dans la plage comprise entre 65 et 180 degrés Celsius.

46. Procédé d'application d'une image à un élément récepteur qui comprend, dans l'ordre (i) - (iv), les étapes consistant à :
(i) former une image sur une feuille d'étiquette thermodurcissable, dans lequel ladite feuille d'étiquette thermodurcissable comprend :
(a) un support ;
une couche adhésive sensible à la pression comprenant au moins un polyester, un polymère acrylique, ou un mélange de copolymère, ledit polyester, polymère acrylique ou mélange de copolymère ayant une température de transition de verre (Tg) inférieure à 0 °C ; et
une couche d'adhérence comprenant un polymère thermoplastique qui fond à une température située dans la plage comprise entre 50 et 250 °C, une cire qui fond à une température située dans la plage comprise entre 50 et 250 °C, ou des combinaisons de celles-ci ;
dans lequel ladite couche adhésive sensible à la pression se trouve sur le support et ladite couche d'adhérence se trouve sur la couche adhésive sensible à la pression ; ou
(b) un support ;
une couche barrière enduite sur le support, ladite couche barrière comprenant (1) un acétate de vinyle avec une Tg située dans la gamme comprise entre - 10 °C et 100 °C ; (2) un polymère thermoplastique n'ayant sensiblement aucun pouvoir adhésif aux températures de transfert, un paramètre de solubilité d'au moins 19 (Mpa)^{1/2}, et une température de transition de verre d'au moins 0 °C, ou (3) des polymères thermodurcissables, des polymères traités aux ultraviolets, ou
des combinaisons de ceux-ci ; et une couche d'adhérence enduite sur la couche barrière et comprenant un polymère thermoplastique qui fond à une température située dans la plage comprise entre 50 et 250 °C, une cire qui fond à une température située dans la plage comprise entre 50 et 250 °C, ou des combinaisons de celles-ci ; et
(ii) décoller ladite couche d'image et adhérence dudit support dans lequel ladite étape consistant à décoller se produit sans apport d'eau, de chaleur ou de produits chimiques ;
(iii) positionner la couche d'adhérence contre ledit élément récepteur ; et à
(iv) appliquer de la chaleur à la couche d'adhérence.

47. Procédé selon la revendication 46, dans lequel ladite formation d'image est fournie par une imprimante électrostatique ou un copieur.

48. Procédé selon la revendication 46, dans lequel ladite formation d'image est fournie par une impression offset ou une impression en sérigraphie.

49. Procédé selon la revendication 46, dans lequel ladite formation d'image est fournie par un marquage de type artisanal.

50. Procédé selon la revendication 49, dans lequel ledit marquage de type artisanal est choisi dans le groupe comprenant les marqueurs, les crayons, les peintures ou les stylos.

51. Procédé selon la revendication 46, dans lequel ladite formation d'image est fournie par une impression à jet d'encre.

52. Procédé selon la revendication 46, dans lequel ladite feuille d'étiquette thermodurcissable comprend de plus une couche opaque placée sur la couche d'adhérence, dans lequel ladite couche opaque comprend un latex de styrène-butadiène, éventuellement une matière colorante, un polymère thermoplastique et un élastomère.

53. Procédé selon la revendication 52, dans lequel ladite feuille d'étiquette thermodurcissable comprend une seconde couche opaque comprenant un copolymère d'acétate de vinyle éthylène, éventuellement une matière colorante, un élastomère thermoplastique et un élastomère, dans lequel ladite seconde couche opaque est enduite sur la couche opaque.

54. Procédé selon la revendication 46, dans lequel ladite feuille d'étiquette thermodurcissable comprend une couche de réception d'image enduite sur la couche d'adhérence qui comprend au moins un polymère qui est capable de recevoir et de retenir des colorants à base d'eau, ladite couche de réception d'image soit ne fond pas lorsque de la chaleur est appliquée, soit fond à une température supérieure à la température de fusion de la couche d'adhérence.

55. Procédé selon la revendication 52, dans lequel ladite feuille d'étiquette thermodurcissable comprend une couche de réception d'image enduite sur une couche opaque qui comprend au moins un polymère qui est capable de recevoir et de retenir des colorants à base d'eau, ladite couche de réception d'image soit ne fond pas lorsque de la chaleur est appliquée, soit fond à une température supérieure à la température de fusion de la couche d'adhérence.

56. Procédé selon la revendication 53, dans lequel ladite feuille d'étiquette thermodurcissable comprend une couche de réception d'image enduite sur ladite seconde couche opaque qui comprend au moins un polymère qui est capable de recevoir et de retenir des colorants à base d'eau, ladite couche de réception d'image soit ne fond pas lorsque de la chaleur est appliquée, soit fond à une température supérieure à la température de fusion de la couche d'adhérence.

57. Procédé selon la revendication 46, dans lequel ladite chaleur est appliquée indirectement à l'étiquette.

58. Feuille d'étiquette thermodurcissable selon la revendication 1, dans laquelle ladite couche d'adhérence est présente dans une quantité d'enrobage à sec comprise entre 5 g / m² et 100 g / m².

59. Feuille d'étiquette thermodurcissable, qui comprend :
(i) un support ;
(ii) une couche adhésive sensible à la pression comprenant au moins un polyester, un polymère acrylique, ou un mélange de copolymère, ledit polyester, polymère acrylique ou mélange de copolymère ayant une température de transition de verre (Tg) inférieure à 0 °C ;
(iii) une couche d'adhérence comprenant un polymère thermoplastique qui fond dans une plage comprise entre 50 °C et 250 °C, une cire qui fond dans une plage comprise entre 50 °C et 250 °C, ou des combinaisons de celles-ci, dans laquelle la couche d'adhérence peut être retirée du support sans apport de chaleur ; et
(iv) au moins une couche opaque comprenant une matière colorante.

60. Feuille d'étiquette thermodurcissable, qui comprend :
(i) un support ;
(ii) une couche adhésive sensible à la pression comprenant au moins un polyester, un polymère acrylique, ou un mélange de copolymère, ledit polyester, polymère acrylique ou mélange de copolymère ayant une température de transition de verre (Tg) inférieure à 0 °C ;
(iii) une couche d'adhérence comprenant un polymère thermoplastique qui fond dans une plage comprise entre 50 °C et 250 °C, une cire qui fond dans une plage comprise entre 50 °C et 250 °C, ou des combinaisons de celles-ci, dans laquelle la couche d'adhérence peut être retirée du support sans apport de chaleur ;
(iv) une couche opaque facultative comprenant un latex styrène butadiène, un polymère thermoplastique, un élastomère et éventuellement une matière colorante;
(v) une seconde couche opaque facultative comprenant un copolymère d'éthylène acétate de vinyle, un élastomère thermoplastique, un élastomère et éventuellement une colorante nature ; et
(vi) une couche d'image.

61. Feuille d'étiquette thermodurcissable selon la revendication 59, dans laquelle ladite au moins une couche opaque comprend l'un des deux éléments (a) ou (b) suivants, voire les deux :
(a) une couche opaque comprenant un latex styrène butadiène, un polymère thermoplastique, un élastomère éventuellement et une matière colorante facultative ; et / ou
(b) une couche opaque comprenant un copolymère d'éthylène acétate de vinyle, un élastomère thermoplastique, un élastomère et éventuellement une matière;
dans lequel au moins l'une des couches opaques (a) ou (b) contient une matière colorante.
